# FASCICULE DE BREVET EUROPEEN

(11) **EP 2 564 708 B1**
(45) Date de publication et mention de la délivrance du brevet: **25.05.2016**
(21) Numéro de dépôt: 12182483.3
(22) Date de dépôt: 30.08.2012
(51) Int. Cl.: A23L 29/30, A23L 27/00, A23L 27/30

(54) **Composition pulvérulente comprenant un glucide et un extrait de stevia, son procédé de fabrication et son application dans le domaine alimentaire et pharmaceutique**
Pulverförmige Zubereitung enthaltend ein Gluzid und ein Extrakt von Stevia, ihr Herstellungsverfahren und ihre Verwendung in Lebensmitteln und Arzneimitteln
Powder composition comprising a saccharide and a stevia extract, and its manufacturing process and use in food and pharmacy

(30) Priorité: 30.08.2011 FR 1157640
(43) Date de publication de la demande: 06.03.2013
(73) Titulaire: Tereos France, 02390 Origny Sainte Benoite (FR)
(72) Inventeur: Wong, Emile, 01700 Neyron (FR)
(74) Mandataire: Grosset-Fournier, Chantal Catherine

(56) Documents cités:
- EP-A1- 2 215 914
- EP-A2- 0 334 617
- WO-A1-2010/025158
- US-A1- 2003 031 772
- US-A1- 2010 015 320
- US-A1- 2011 059 218
- US-A1- 2011 195 169

## Description

La présente invention concerne une composition pulvérulente comprenant un glucide et un extrait de stévia, son procédé de fabrication ainsi que son application dans le domaine alimentaire et pharmaceutique.

D'après les dernières estimations mondiales de l'OMS établies pour 2008, environ 1,6 milliards d'adultes (âgés de 20 ans et plus) étaient en surpoids, et au moins 500 millions d'adultes présentaient les critères de l'obésité. Le surpoids et l'obésité entrainent de graves conséquences pour la santé. Ce phénomène a rapidement pris les proportions d'une épidémie mondiale. Afin de limiter les risques de surpoids et d'obésité, il est conseillé d'équilibrer son apport énergétique, notamment en limitant la consommation de sucre et en ayant recours à des édulcorants, synthétiques ou naturels.

La plupart des édulcorants naturels proviennent des végétaux, plantes ou arbres. Ces composés appartiennent principalement aux classes des terpénoïdes, des flavonoïdes ou des protéines. La faible absorption de ces composés dans l'organisme rend leur utilisation particulièrement intéressante d'un point de vue nutritionnel. Plusieurs de ces édulcorants naturels sont actuellement couramment utilisés dans des préparations alimentaires, notamment des boissons, sodas, yaourts, crèmes glacées, biscuits, gâteaux et céréales. Parmi les plantes contenant des édulcorants naturels, la Stévia connait un engouement important.

Les extraits de la feuille de Stévia (*Stevia Rebaudiana* Bertoni), contiennent des édulcorants intenses appelés glycosides de stéviol (ou stéviosides), pouvant avoir un pouvoir sucrant jusqu'à 300 fois supérieur à celui du saccharose. Les composants majeurs de la feuille de Stévia sont le stévioside, les rébaudiosides A, B, C, D, E et F et le dulcoside A. Tous ces composés sont des glycosides diterpénoïdes partageant une structure commune d'aglycone (stéviol) associé à des molécules de glucose, de xylose ou de rhamnose mais possédant des résidus de sucres différents en position C13 et C19. Ainsi, le stévioside et les rébaudiosides sont les composants majeurs des feuilles de Stévia qui sont utilisés.

Le profil sensoriel des extraits de stévia est différent de celui du saccharose : ils laissent une sensation sucrée qui dure plus longtemps en bouche (rémanence) que celle laissée par le saccharose, sont plus astringents ; certains peuvent laisser un léger goût amer ressemblant à la réglisse, surtout à forte concentration.

Afin de pouvoir utiliser ces extraits de stévia, leur association avec d'autres édulcorants conduit la recherche d'amélioration de leur profil sensoriel (EP 0 334 617 B1 et EP 2 215 914 A1). Par ailleurs, des digestions enzymatiques des stéviosides par des pullanases, des isomaltases ou des dextrine-saccharases (Lobov et al. 1991, Agric Biol Chem 55(12), 2959-2965 / Yamamoto et al. 1994, Biosci Biotechnol Biochem 58(9), 957-965) permettent également de réduire les arrières goûts des stéviosides. Plus récemment, des extraits de stévia ont été associés à des glycosides ou des glucides, notamment le saccharose (WO 2008/049256 A1). Mais le mélange de poudre d'extrait de stévia et de cristaux de saccharose ne donne pas un profil sensoriel optimal. En effet, on constate qu'un simple mélange physique des extraits de stévia et du saccharose conduit à une composition de poudre où l'édulcorant intense est à l'extérieur des cristaux de sucre. La poudre d'extrait de stévia est donc la première à être délivrée dans la cavité buccale, ce qui renforce les arrières goûts indésirables décrits précédemment.

Ainsi, même si les extraits de stévia sont largement utilisés comme édulcorant, leur profil sensoriel et celui des compositions les comprenant constituent un important frein à leur utilisation.

Plus récemment, des compositions sucrées contenant des proportions variables de rébaudioside A, de diholoside et de dérivés de cellulose ont été mises au point (WO 2010/025158 A1). Par des techniques d'enrobages successifs de particules solides, le rébaudioside A est systématiquement recouvert par une couche de cellulose, empêchant le contact direct du rébaudioside A avec la langue. Cependant, les procédés décrits dans cette invention nécessitent plusieurs étapes qui aboutissent à des compositions hétérogènes.

D'autres compositions sucrées comprenant des extraits de stévia sont décrites dans, par exemple, US 2011/0059218 et US 2011/0195169. Une des difficultés majeures de la manipulation du rébaudioside A repose sur sa propension à spontanément cristalliser lorsqu'il est mis en solution. Cette caractéristique physique est liée aux différentes formes chimiques du rébaudioside A. Sous sa forme hydrate, le rébaudioside A est peu soluble dans l'eau (solubilité inférieure à 1% ms, matière sèche) alors que sous sa forme anhydre, le rébaudioside A permet la fabrication de solutions aqueuses jusqu'à une concentration de 20% ms (matière sèche). Cependant, une fois mis en solution, une proportion de rébaudisoside A passe sous une forme solvatée, instable qui va aboutir à la formation de cristaux en forme de fines aiguilles. La présence de ces cristaux confère un aspect de type « gel » à la solution, la rendant difficilement incorporable, notamment à des compositions alimentaires. Il est par conséquent très difficile d'obtenir des solutions de rébaudioside A fortement concentrées qui sont stables. Récemment, la mise au point d'une nouvelle forme cristalline du rébaudioside A a permis la préparation de solutions aqueuses atteignant une concentration en rébaudioside A de 45% ms (matière sèche) à 24°C (WO 2010/11118218). Les procédés nécessitent plusieurs étapes dont une étape de séchage sous vide à l'issue de laquelle les cristaux de rébaudioside A contiennent 2% d'eau résiduelle. Laissés à l'air libre, ces cristaux se chargent rapidement de l'humidité ambiante rendant leur manipulation impropre à toute utilisation ultérieure.

Le but de la présente invention est de proposer une composition pulvérulente homogène comprenant un glucide cristallisable ou un mélange de glucides cristallisables et un extrait de stévia, aux propriétés organoleptiques comparables à celles du glucide cristallisable ou du mélange de glucides cristallisables, et ne présentant plus le goût amer inhérent aux extraits de stévia.

Un autre but de l'invention est de fournir un procédé de fabrication des compositions susmentionnées.

Un autre but de l'invention est de proposer une utilisation de ces compositions pulvérulentes pour l'élaboration de préparations alimentaires et pharmaceutiques.

La présente invention concerne une composition pulvérulente de cristaux comprenant :
- des cristaux d'un glucide cristallisable ou d'un mélange de glucides cristallisables à raison d'au moins 80%, en particulier 90% en masse par rapport au poids total de la composition,
- un extrait de stévia à raison de 0,1% à 20%, en particulier de 0,3% à 10% en masse par rapport au poids total de la composition, ledit extrait de stévia sous sa forme amorphe étant encapsulé dans les cristaux du susdit glucide cristallisable ou du susdit mélange de glucides cristallisables,
ladite composition étant dotée d'un pouvoir sucrant supérieur à celui du susdit glucide cristallisable ou du susdit mélange de glucides cristallisables et d'une flaveur dépourvue d'amertume, et ladite composition possédant un point de fusion inférieur à celui du susdit glucide cristallisable ou du susdit mélange de glucides cristallisables.

Il a été constaté de façon surprenante que l'extrait de stévia encapsulé dans des cristaux de glucide(s) a des propriétés organoleptiques améliorées par rapport au même extrait de stévia seul, ou par rapport à un mélange physique du même extrait de stévia et de glucide(s) ou encore par rapport au même extrait de stévia enrobant le(s) glucide(s).

Pour cela, il est essentiel que l'extrait de stévia se trouve sous sa forme amorphe dans le cristal d'un glucide cristallisable ou d'un mélange de glucides cristallisables. La moindre cristallisation non maitrisée de l'extrait de stévia conduit à l'obtention de compositions distinctes de celles divulguées dans la présente invention qui possèdent par conséquent des propriétés organoleptiques différentes de celles résultant des compositions de la présente invention.

Par « composition pulvérulente », on désigne une composition de glucide(s) et d'extrait de stévia co-séchés présentée sous forme de solide divisé à l'état sec. La granulométrie des compositions pulvérulentes produites par l'industrie sucrière s'étend classiquement de 0,20 mm à 0,75 mm (sucre *semoule*, sucre *de canne*) mais peut varier de 0,070 mm pour du sucre *glace* à 8 mm pour un sucre *grain*.

Par « glucide », on désigne une substance de saveur sucrée. Les glucides sont également appelés hydrates de carbone. Les glucides sont subdivisés en oses (monosaccharides tel que le glucose, le galactose ou le fructose) et osides, qui sont des polymères d'oses (polysaccharides). Le saccharose est un disaccharide (diholoside). Seuls les monosaccharides et les disaccharides ont un pouvoir sucrant. Les polysaccharides, comme l'amidon, sont insipides. Les oses sont des molécules simples, non hydrolysables, formant des cristaux. Les osides (sucres complexes), hydrolysables sont des polymères d'oses liés entre eux par une liaison osidique. Parmi les osides on distingue les holosides qui sont des polymères exclusivement d'oses et les hétérosides qui sont des polymères d'oses et de molécule(s) non glucidique appelée aglycone. Dans la présente invention, le terme glucide n'est pas limité au saccharose mais s'étend aux oses et aux disaccharides de manière générale.

Par « glucide cristallisable », on désigne les hydrates de carbones qui ont la propriété de former des cristaux, c'est-à-dire des solides qui ont des caractéristiques spécifiques parfaitement définies telles que le point de fusion ou la structure cristalline.

Par « extrait de stévia », on désigne une préparation concentrée des substances obtenues par extraction des feuilles de stévia par un liquide minéral ou organique, suivie de purification et de séchage aboutissant à l'obtention d'une poudre. L'extrait de stévia est constitué d'au moins 90% de glycosides de stéviol. Il peut être obtenu par purification d'un extrait en phase aqueuse des feuilles de *Stevia Rebaudiana Bertoni* par des solvants organiques puis passage sur des résines échangeuses d'ions ou toute autre méthode bien connue de l'homme de l'art (US 2011/0124587 A1).

Par « cristaux », on désigne la forme stable à l'état solide d'un glucide ou d'un mélange de glucides renfermant en sa structure un extrait de stévia, et éventuellement au moins un autre composé. Les cristaux résultent de la cristallisation du susdit glucide ou du susdit mélange de glucides et du susdit extrait de stévia, processus au cours duquel l'extrait de stévia se trouve incorporé dans le cristal du susdit glucide ou du susdit mélange de glucides. Le glucide ou le mélange de glucides sert de charpente cristalline dans laquelle l'extrait de stévia s'insère sous forme d'inclusions de manière comparable à ce qui est observé pour des impuretés. Ces cristaux ont un point de fusion toujours différent de ceux de chacun des constituants rentrant dans sa composition (Mathlouthi M. and Reiser P., 1995, Sucrose: properties and applications, page 187).

Par ailleurs, les cristaux de l'invention se distinguent d'un simple mélange physique de deux cristaux, l'un comprenant le glucide ou le mélange de glucides et l'autre comprenant l'extrait de stévia. En effet, dans le cas d'un mélange physique de deux cristaux, le point de fusion du mélange est celui de l'ingrédient ayant le point de fusion le plus bas.

Les cristaux de l'invention se distinguent également des cristaux de sucre obtenus par des techniques d'enrobages successifs où l'extrait de stévia recouvre la particule de glucide et est lui-même enrobé d'une couche de cellulose. Un produit d'enrobage est obtenu par ajout de couches externes à partir d'un solide initial. Les ingrédients qui composent un produit d'enrobage sont mieux répartis et parfaitement localisés par rapport à un mélange physique de deux poudres. Pour un produit d'enrobage, il n'y a pas de modification des propriétés physicochimiques des constituants, et notamment le point de fusion reste celui du glucide de la particule.

Par « encapsulé », on désigne l'état où le glucide ou le mélange de glucides a emprisonné dans son réseau cristallin des molécules étrangères. Dans la présente invention, l'extrait de stévia est inséré dans la structure cristalline du glucide ou du mélange de glucides. Ainsi, l'extrait de stévia ne figure pas exclusivement à la surface du cristal de glucide et ne constitue pas un enrobage de la particule de glucide. D'un point de vue structural, l'introduction de molécules d'extraits de stévia dans la matrice cristalline du glucide ou du mélange de glucides est comparable à une inclusion des molécules d'extrait de stévia dans le réseau cristallin des glucides sans modification de la maille cristalline.

L'extrait de stévia est réparti de manière homogène dans le cristal de glucide ou du mélange de glucides de sorte que, lors de la mise en bouche, le(s) glucide(s) et l'extrait de stévia sont détectés simultanément par les récepteurs linguaux. La composition pulvérulente est identique indépendamment de la granulométrie des particules et de la cinétique de prélèvement physique effectué sur ladite composition pulvérulente en cours de procédé industriel.

Dans la présente invention, les termes « encapsulation » ou « inclusion » sont employés indifféremment pour parler de la substitution des atomes de glucide cristallisable ou de mélange de glucides cristallisables par des molécules d'extrait de stévia. Le terme « encapsulation » ne doit en aucun cas être interprété comme « enrobage » ou confondu avec la notion « d'enrobages successifs » qui ne concerne pas les compositions de la présente invention.

Par « pouvoir sucrant », on désigne la capacité d'un composé chimique à être perçu par un individu comme du sucre. Le pouvoir sucrant est déterminé par rapport à une référence (en général, une solution de saccharose dont le pouvoir sucrant est, par définition, égal à 1 ou 100). La comparaison peut se faire à faible concentration (seuil de reconnaissance) ou forte concentration (jusqu'à 10%) en solution aqueuse à 20°C. Le pouvoir sucrant est évalué avec un panel de personnes entrainées et les produits sont comparés dans des conditions identiques et standardisées (température, concentration et matrice). Le pouvoir sucrant des compositions de l'invention est évalué notamment par comparaison avec une solution de saccharose dosée à 8% à une température de 20°C.

Par « point de fusion », on désigne la température à laquelle un corps passe de l'état solide à l'état liquide. Le point fusion d'un corps pur est fixe. En revanche, le point de fusion d'un mélange de corps purs correspond au point de fusion du constituant ayant le point de fusion le plus bas. Dans le cas de la présente invention, les cristaux de glucide(s) et d'extrait de stévia ont un point de fusion lié à la composition du produit, c'est-à-dire dépendant des concentrations données de glucide(s) et d'extrait de stévia. Le point de fusion des cristaux de glucide(s) et d'extrait de stévia des compositions de l'invention diminue de 2 à 5°C par rapport à celui des cristaux de glucide(s) seul(s).

Les édulcorants possèdent des propriétés organoleptiques propres qui les distinguent des glucides. Les stéviosides présentent notamment une amertume, un arrière goût de réglisse et une persistance en bouche supérieure à celle des sucres. Leur intérêt réside dans leur apport calorique réduit par rapport aux sucres.

Par « propriétés organoleptiques », on désigne les caractéristiques d'une substance qui sont perceptibles par les organes des sens : saveur, odeur, rondeur en bouche et arrière goût. Le but de la présente invention est de fournir des compositions sucrantes présentant un profil organoleptique proche de celui du glucide cristallisable ou du mélange de glucides cristallisables de la composition avec un apport calorique réduit dû à l'introduction de l'extrait de stévia.

La proportion maximale en stévia est de 20 % car au delà de 20 %, il devient difficile de cristalliser de façon homogène un glucide ou un mélange de glucides en emprisonnant les glycosides de stéviol dans la structure cristalline car ces derniers ont tendance dans un premier temps à cristalliser seuls.

En deçà de 0,1 %, l'association d'un extrait de stévia avec un glucide cristallisable ou un mélange de glucides cristallisables ne présente que peu d'intérêt en termes d'augmentation du pouvoir sucrant et de diminution de l'apport calorique. En effet, 0,1% d'un extrait de stévia représente jusqu'à 30% de diminution calorique. Une concentration en extrait de stévia inférieure à 0,1% fournit une diminution calorique peu intéressante au regard du surcoût apporté par cette matière première.

L'invention concerne une composition pouvant comporter différents glucides cristallisables, eux-mêmes pouvant encapsuler différents extraits de stévia.

Ainsi, selon un mode de réalisation particulier, le glucide cristallisable de la composition pulvérulente de l'invention est choisi parmi le saccharose, le glucose, le fructose, le lactose, ou un mélange d'au moins deux de ces glucides cristallisables.

Selon un autre mode de réalisation particulier, le glucide cristallisable de la composition pulvérulente de l'invention est le saccharose.

Selon encore un autre mode de réalisation particulier, l'extrait de stévia de la composition pulvérulente de l'invention est choisi parmi les glycosides de stéviol suivants : rébaudioside A, rébaudioside B, rébaudioside C, rébaudioside D, rébaudioside E, rébaudioside F, stévioside, stéviolbioside et dulcoside A, ou un mélange d'au moins deux de ces glycosides de stéviol.

Par « stéviolglycoside », on désigne des glucosides, xylosides et ou rhamnosides de stéviols (diterpène) extraits du stévia. Les termes glycosides de stéviol et stéviosides sont équivalents et désignent des molécules de même nature extraites des feuilles séchées de stévia. Les steviolglycosides sont organisés autour du noyau de steviol et différent par le nombre et la position des résidus glucose, xylose ou rhamnose qu'ils contiennent.

Par « rébaudioside A », on désigne le stéviolglycoside bien connu de l'homme de l'art, référencé sous le numéro CAS n° 58543-16-1 dont la nomenclature IUPAC est 19-O-beta-glucopyranosyl-13-O-(beta-glucopyranosyl(1-2)-beta-glucopyranosyl(1-3))-beta-glucopyranosyl-13-xhydroxykaur-16-en-19-oic acid. Le rébaudioside A peut être obtenu par extraction des feuilles de la plante Stévia ou bien synthétisé chimiquement. Lorsqu'il est extrait, le rébaudioside A peut contenir des impuretés provenant de la plante, notamment d'autres glycosides de stéviol ou des résidus du lignage cellulosique. Dans la présente invention, le rébaudioside A utilisé est celui préconisé par les autorités sanitaires ayant un degré de pureté minimum de 97 %, notamment 98 % (AFSSA, saisine n° 2009-SA-0119).

Selon un mode de réalisation particulier, le taux de rébaudioside A dans l'extrait de stévia est d'au moins 40% et notamment de 90% à 100%.

Selon un mode de réalisation particulier, l'invention concerne une composition pulvérulente telle que définie précédemment, dans laquelle l'extrait de stévia est le rébaudioside A.

Selon un autre mode de réalisation particulier, l'invention concerne une composition pulvérulente telle que définie précédemment, dans laquelle le rébaudioside A présente un degré de pureté d'au moins 97%, notamment 98%.

Selon un autre mode de réalisation plus particulier, le glucide cristallisable et l'extrait de stévia de la composition pulvérulente de l'invention sont respectivement le saccharose et le rébaudisoide A. L'association de ces deux composés présente le meilleur profil organoleptique, notamment en termes de rémanence, d'arrière goût et d'amertume.

L'extrait de stévia étant sous forme amorphe dans les compositions selon la présente invention, cela signifie que dans les compositions pulvérulentes de cristaux selon la présente invention, lorsque le glucide cristallisable est le saccharose et l'extrait de stévia est le rébaudioside A, alors le rébaudioside A sous sa forme amorphe se retrouve inclus dans la maille cristalline du saccharose.

Selon encore un autre mode de réalisation particulier, le rébaudioside A et le saccharose de la composition pulvérulente de l'invention sont à des concentrations respectives de 0,1% à 20% ms (matière sèche), en particulier de 0,3% à 10%, en particulier de 0,3% à 5%, en particulier de 5% à 10%, en particulier de 6% à 10%, pour le rébaudioside A et à une concentration de 80% à 99,9% ms (matière sèche), en particulier de 90% à 99,7%, en particulier de 95% à 99,5%, en particulier de 90% à 95% pour le saccharose.

En d'autres termes, le rébaudioside A sous sa forme amorphe et le saccharose de la composition pulvérulente de l'invention sont à des concentrations respectives de 0,1% à 20% ms (matière sèche), en particulier de 0,3% à 10% pour le rébaudioside A et à une concentration de 80% à 99,9% ms (matière sèche), en particulier de 90% à 99,7% pour le saccharose.

Selon un mode de réalisation plus particulier, l'invention concerne une composition pulvérulente comprenant de 90% à 99, 7% de saccharose et 0,3% à 10% de rébaudioside A, dans laquelle le point de fusion des cristaux varie de 185°C à 188°C.

Selon un mode de réalisation plus particulier, l'invention concerne une composition pulvérulente comprenant 90% de saccharose et 10% de rébaudioside A, dans laquelle le point de fusion des cristaux est de 188°C.

Selon un mode de réalisation encore plus particulier, l'invention concerne une composition pulvérulente dans laquelle le rébaudioside A est à une concentration de 9,8% ms (matière sèche) et le saccharose est à une concentration de 90,2% ms (matière sèche), ledit rébaudioside A sous sa forme amorphe étant encapsulé dans les cristaux de saccharose.

Selon encore un autre mode de réalisation particulier, l'invention concerne une composition pulvérulente dans laquelle le rébaudioside A est à une concentration de 6,4% ms (matière sèche) et le saccharose est à une concentration de 93,6% ms (matière sèche), ledit rébaudioside A sous sa forme amorphe étant encapsulé dans les cristaux de saccharose.

Le point de fusion de la composition pulvérulente comprenant le saccharose et le rébaudioside A est inférieur à celui du saccharose pur (190°C) et celui du rébaudioside A pur (242-244°C). Cette caractéristique permet de distinguer les compositions pulvérulentes de la présente invention du simple mélange physique de deux poudres de saccharose et de rébaudioside A.

La composition pulvérulente de l'invention est susceptible d'être comprimée directement, par exemple aussi bien avec des presses uniaxiales qu'avec des presses rotatives dont l'alimentation peut être gravitaire ou forcée. Il existe des presses uniaxiales commercialisées bien connues de l'homme de l'art, constituées généralement de deux poinçons et d'une matrice (réceptacle de diamètre et de hauteur fixes). La fonction des poinçons est de comprimer la poudre placée dans la matrice et de permettre l'éjection du comprimé une fois formé. Dans le cas de la présente invention, les comprimées ont été obtenus par compression de la composition pulvérulente de l'invention dans une presse alternative (Frogerais) où seul le poinçon supérieur sert à la compression. Pour d'autres presses, les deux poinçons (inférieur et supérieur) peuvent servir à la compression. Dans ce cas, la résistance des comprimés à la compression sera plus élevée.

La composition pulvérulente de l'invention, lorsqu'elle est comprimée, possède une résistance comprise de 1 à 2,2 MPa pour une force de compression variant de 15 à 25 kN et une force d'éjection comprise de 70 à 106 N pour une force de compression variant de 15 à 25 kN.

Par « résistance », on désigne la capacité physique d'un comprimé à résister à la force nécessaire pour provoquer sa rupture par écrasement. La résistance des comprimées est mesurée selon la méthode décrite dans 7^{ième} édition de la Pharmacopée Européenne, chapitre 2.9.8. Dans la présente invention, la composition pulvérulente peut être comprimée avec 0,75% de stéarate de magnésium. Le stéarate de magnésium exerce les fonctions de lubrifiant.

Par « force d'éjection », on désigne la force qu'il faut appliquer au poinçon inférieur pour libérer le comprimé de la matrice. Cette mesure est effectuée après le retrait du poinçon supérieur de la matrice.

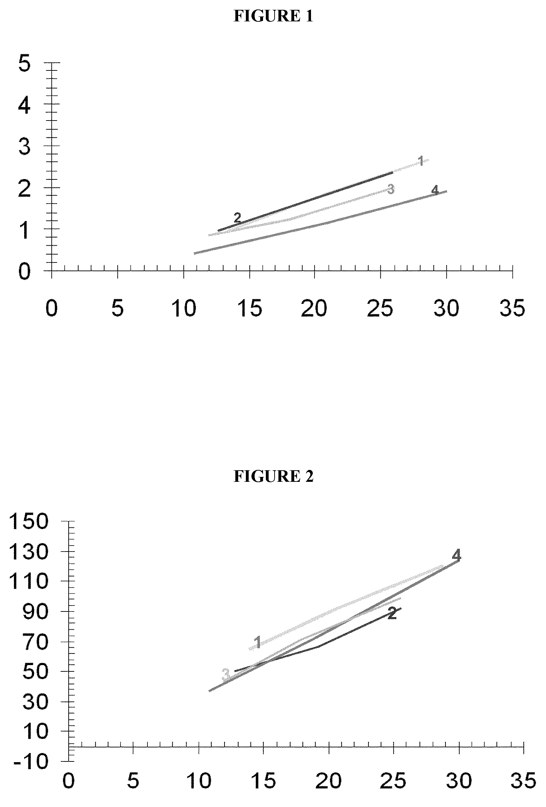

Les valeurs mesurées avec les compositions de l'invention sont indiquées sur des courbes et comparées sur les mêmes graphes aux valeurs obtenues avec des poudres commerciales connues de l'art antérieur (figures 1 et 2).

Les compositions pulvérulentes selon la présente invention ont un pouvoir sucrant de 2 fois à 65 fois supérieur à celui du glucide cristallisable ou du mélange de glucides cristallisables.

Deux solutions qui développent la même intensité sucrée auront le même pouvoir sucrant. Les édulcorants dont le pouvoir sucrant est voisin de 1 (ou 100) sont appelés édulcorants de masse ou de charge. Les édulcorants dont le pouvoir sucrant est bien supérieur à 1 (ou supérieur à 100) sont appelés édulcorants intenses. Les stéviolgycosides rentrent dans cette dernière catégorie d'édulcorants. Le pouvoir sucrant des compositions de l'invention est évalué notamment par comparaison avec une solution de saccharose dosée à 8% à une température de 20°C.

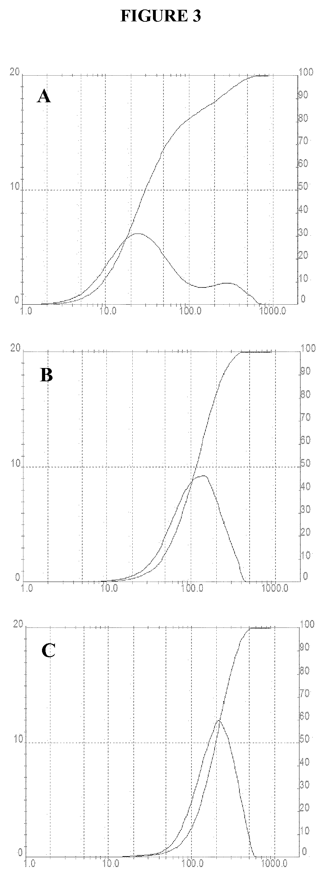

Les compositions pulvérulentes selon la présente invention ont une distribution granulométrique moyenne des cristaux variant de 140 µm à 200 µm (figure 3).

Par « distribution granulométrique moyenne », on désigne la répartition par catégorie de taille des particules formant la composition pulvérulente de la présente invention. La mesure est réalisée avec un granulomètre laser Mastersizer MSS Malvern avec une pression d'alimentation de la poudre de 1 bar. La distribution granulométrique moyenne correspond à la valeur D(v,0.5) c'est-à-dire au diamètre médian. Le diamètre médian est le diamètre correspondant à la ligne des 50% sur la courbe de distribution cumulée en poids (Φ50% ou D(v,0.5)).

La composition pulvérulente de l'invention peut contenir également de l'eau résiduelle en faible teneur, pouvant provenir, par exemple, du procédé d'obtention de ladite composition pulvérulente.

Selon un mode de réalisation particulier, la teneur en eau dans la composition pulvérulente de l'invention est inférieure ou égale à 1% en masse par rapport au poids total de la composition.

L'humidité résiduelle est une caractéristique de la composition pulvérulente de l'invention, c'est en fait l'humidité d'équilibre du produit dans des conditions climatiques standard de 20°C et de 50% d'humidité relative. Si l'humidité de la composition pulvérulente de l'invention est supérieure à 1%, celle-ci aura une forte tendance à former des agrégats.

La mesure du taux d'humidité relative peut être effectuée à l'aide d'un hygromètre ou par toute autre technique bien connue de l'homme de l'art. L'humidité relative est exprimée en %, pour une température fixée, et correspond au rapport pression de vapeur sur pression de vapeur saturante multiplié par cent.

Afin d'améliorer les propriétés organoleptiques de la composition pulvérulente de l'invention, et de diminuer les désagréments gustatifs dus à l'extrait de stévia, il est possible d'ajouter un additif à ladite composition pulvérulente de l'invention. Cet additif peut également servir à accroitre le pouvoir sucrant de la composition pulvérulente dans le but de restreindre au maximum l'apport calorique dû à la présence de glucide(s) cristallisable(s).

Ainsi, selon un autre mode de réalisation, l'invention concerne une composition pulvérulente, laquelle comprend au moins un additif à raison de 0,0000001% à 5%, notamment de 0,01% à 5% en masse par rapport au poids total de la composition.

Parmi tous les additifs existants certains additifs sont plus particulièrement utilisés car ils présentent des synergies avec les extraits de stévia.

Ainsi, selon un mode de réalisation particulier, un additif de la composition pulvérulente de l'invention est choisi parmi le glucose, le fructose, le sucre inverti, l'érythritol, les fructooligosaccharides, les oligofructoses, les maltodextrines, le caramel, le caramel décoloré et déodorisé, le maltol, des arômes masquant d'arrières goût, la thaumatine, la néohespéridine dihydrochalcone, l'acésulfame de potassium, l'aspartame et le cyclamate.

La thaumatine est extraite de la graine du fruit de l'arbre de la forêt tropical africaine appelé Katemfe (*Thaumatococcus daniellii).* Bien que de nature protéique, la thaumatine possède un pouvoir sucrant de 2000 à 3000 supérieur à celui du saccharose. La thaumatine appartient aux édulcorants intenses, au même titre que le rébaudioside A. En plus de ses propriétés d'édulcorant, cet additif peut également jouer le rôle de potentiateur (exhausteur) non seulement en augmentant la perception sucrée dans le temps mais également en masquant l'amertume apportée par l'extrait de stévia.

L'invention concerne également une composition pulvérulente laquelle comprend de la thaumatine à raison de 0,01 % à 5 % en masse par rapport au poids total de la composition.

Selon un mode de réalisation plus particulier, la thaumatine de la composition pulvérulente de l'invention est à une concentration variant de 1 ppb à 100 ppm.

Il peut être avantageux de mélanger la composition pulvérulente de la présente invention avec notamment un glucide pour obtenir une préparation plus aisément manipulable et ayant un apport calorique plus faible (réduction de 30, 50 ou 75% de sucre avec le même pouvoir sucrant).

Ainsi, selon un mode particulier de réalisation, l'invention concerne également un mélange comprenant la susdite composition pulvérulente de cristaux de l'invention avec un glucide.

Le rapport en masse entre la composition pulvérulente de cristaux de l'invention et le glucide varie, par exemple, de 95 à 99,9 % pour le glucide et de 0,1 à 5 % pour la composition pulvérulente. La proportion de glucide du mélange peut varier de 5/1 à 150/1 avec le rébaudioside A. Lorsque le saccharose est le glucide de la composition pulvérulente et le glucide du mélange, alors le saccharose se présente sous deux formes :
- un cristal de saccharose et d'extrait de stévia,
- un cristal de saccharose pur.

La présente invention concerne également un procédé de fabrication d'une composition pulvérulente de cristaux comprenant :
- des cristaux d'un glucide cristallisable ou d'un mélange de glucides cristallisables à raison d'au moins 80%, en particulier 90% en masse par rapport au poids total de la composition,
- un extrait de stévia à raison de 0,1% à 20%, en particulier de 0,3% à 10% en masse par rapport au poids total de la composition, ledit extrait de stévia étant encapsulé dans les cristaux du susdit glucide cristallisable ou du susdit mélange de glucides cristallisables,
ladite composition étant dotée d'un pouvoir sucrant supérieur à celui du glucide cristallisable ou du mélange de glucides cristallisables et d'une flaveur dépourvue d'amertume, et ladite composition possédant un point de fusion inférieur à celui du susdit glucide cristallisable ou du susdit mélange de glucides cristallisables, ledit procédé comprenant les étapes de:
- séchage par atomisation d'un sirop homogène et stable de viscosité inférieure à 50 centipoises (cP), constitué d'un extrait de stévia, d'un glucide cristallisable ou d'un mélange de glucides cristallisables et d'eau, dépourvu de germe cristallin, ledit sirop étant initialement à une température inférieure à 50°C, notamment inférieure à 30°C, pour l'obtention de particules de structure amorphe constituées d'un glucide cristallisable ou d'un mélange de glucides cristallisables, d'un extrait de stévia et de moins de 1% d'eau,
- cristallisation homogène du susdit extrait de stévia et du susdit glucide cristallisable ou du susdit mélange de glucides cristallisables formant les particules obtenues à l'étape précédente.

Par « cristallisation homogène du susdit extrait de stévia et du susdit glucide cristallisable ou du susdit mélange de glucides cristallisables », on désigne l'étape au cours de laquelle les molécules du glucide cristallisable ou du mélange de glucides cristallisables s'organisent dans l'espace pour acquérir une structure cristalline particulière, selon un groupe d'espace. Il est entendu qu'au cours de cette étape, seul le glucide cristallisable ou le mélange de glucides cristallisables acquiert une structure cristalline ; les molécules de l'extrait de stévia s'intègrent dans la maille cristalline du cristallisable ou le mélange de glucides cristallisables, en lieu et place des atomes du glucide cristallisable ou du mélange de glucides cristallisables mais ne forme pas de structure cristalline en propre. C'est la raison pour laquelle il est spécifié que, dans les compositions selon la présente invention, l'extrait de stévia est sous forme amorphe. La cristallisation homogène concerne le composant majoritaire des compositions de l'invention à savoir le glucide cristallisable ou le mélange de glucides cristallisables.

La présente invention concerne également un procédé de fabrication d'une composition pulvérulente de cristaux telle que définie selon la présente invention, ledit procédé comprenant les étapes de:
- séchage par atomisation d'un sirop homogène et stable de viscosité inférieure à 50 centipoises (cP), constitué d'un extrait de stévia, d'un glucide cristallisable ou d'un mélange de glucides cristallisables et d'eau, dépourvu de germe cristallin, ledit sirop étant initialement à une température inférieure à 50°C, notamment inférieure à 30°C, pour l'obtention de particules de structure amorphe constituées d'un glucide cristallisable ou d'un mélange de glucides cristallisables, d'un extrait de stévia et de moins de 1% d'eau,
- cristallisation homogène du susdit extrait de stévia et du susdit glucide cristallisable ou du susdit mélange de glucides cristallisables formant les particules obtenues à l'étape précédente.

En d'autre termes, la présente invention concerne un procédé de fabrication d'une composition pulvérulente de cristaux telle que définie selon la présente invention, ledit procédé comprenant les étapes de:
- séchage par atomisation d'un sirop homogène et stable de viscosité inférieure à 50 centipoises (cP), constitué d'un extrait de stévia, d'un glucide cristallisable ou d'un mélange de glucides cristallisables et d'eau, dépourvu de germe cristallin, ledit sirop étant initialement à une température inférieure à 50°C, notamment inférieure à 30°C, pour l'obtention de particules de structure amorphe constituées d'un glucide cristallisable ou d'un mélange de glucides cristallisables, d'un extrait de stévia et de moins de 1% d'eau,
- cristallisation homogène du susdit glucide cristallisable ou du susdit mélange de glucides cristallisables et du susdit extrait de stévia sous sa forme amorphe formant les particules obtenues à l'étape précédente.

La présente invention concerne également un procédé de fabrication d'une composition pulvérulente de cristaux comprenant :
- des cristaux d'un glucide cristallisable ou d'un mélange de glucides cristallisables à raison d'au moins 80%, en particulier 90% en masse par rapport au poids total de la composition,
- un extrait de stévia à raison de 0,1 % à 20%, en particulier de 0,3% à 10% en masse par rapport au poids total de la composition, ledit extrait de stévia étant encapsulé dans les cristaux du susdit glucide cristallisable ou du susdit mélange de glucides cristallisables,
ladite composition étant dotée d'un pouvoir sucrant supérieur à celui du glucide cristallisable ou du mélange de glucides cristallisables et d'une flaveur dépourvue d'amertume, et ladite composition possédant un point de fusion inférieur à celui du susdit glucide cristallisable ou du susdit mélange de glucides cristallisables, ledit procédé comprenant les étapes de:
- séchage par atomisation d'un sirop homogène et stable de viscosité inférieure à 50 centipoises (cP), comprenant un extrait de stévia, un glucide cristallisable ou un mélange de glucides cristallisables et de l'eau, dépourvu de germe cristallin, ledit sirop étant initialement à une température inférieure à 50°C, notamment inférieure à 30°C, pour l'obtention de particules de structure amorphe comprenant un glucide cristallisable ou un mélange de glucides cristallisables, un extrait de stévia et moins de 1% d'eau,
- cristallisation homogène du susdit extrait de stévia et du susdit glucide cristallisable ou du susdit mélange de glucides cristallisables formant les particules obtenues à l'étape précédente.

Le sirop homogène et stable a une composition variant de 5% à 25% d'extrait de stévia et de 40% à 95% de glucide(s) cristallisable(s) exprimés en pourcentage de matière sèche.

Le procédé de l'invention est mis en oeuvre à partir d'un sirop homogène et stable comprenant un extrait de stévia, un glucide cristallisable ou un mélange de glucides cristallisables et de l'eau, lequel sirop est atomisé pour donner des particules de structure amorphe à partir desquelles l'extrait de stévia et le glucide ou le mélange de glucides cristallisent. Les cristaux de l'invention sont issus d'une phase solubilisée homogène contenant tous les ingrédients qui les composent. Cette phase solubilisée homogène est pulvérisée en fines goutelettes qui sont séchées par atomisation pour donner naissance à des particules de structure amorphes. Avant la cristallisation, les conditions sont réunies pour qu'il n'y ait aucune initiation préférentielle de cristallisation de l'un ou de l'autre des éléments constituant le sirop homogène et stable.

Par « sirop homogène et stable », on désigne une solution aqueuse constituée d'un extrait de stévia et de glucide(s) cristallisable(s) parfaitement limpide, sans particule solide en suspension. Cet aspect homogène du sirop peut être contrôlé notamment en microscopie optique ou par mesure de la turbidité qui sont des techniques bien connues de l'homme de l'art, et notamment la méthode ICUMSA GS2/3-18 « Determination of the turbidity of white sugar solutions ». La turbidité d'une solution est le reflet de sa teneur en particules solides qui absorbent, diffusent ou réfléchissent la lumière passant au travers de cette solution. Les molécules d'extrait de stévia et de glucide(s) cristallisable(s) sont si bien mélangées que la composition est identique en chacun de ses points. La stabilité du sirop est son aptitude à conserver un aspect limpide, sans apparition de matière solide en suspension dans des conditions de conservation dépourvues de tout stress thermique ou mécanique. La turbidité du sirop reste inchangée pendant toute la durée de l'étape de séchage par atomisation.

Par ailleurs, le sirop doit être pompable pour pouvoir entrer dans un processus industriel. La viscosité du sirop de la présente invention ne dépasse pas 50 centipoises (cP) pour une température de 20°C.

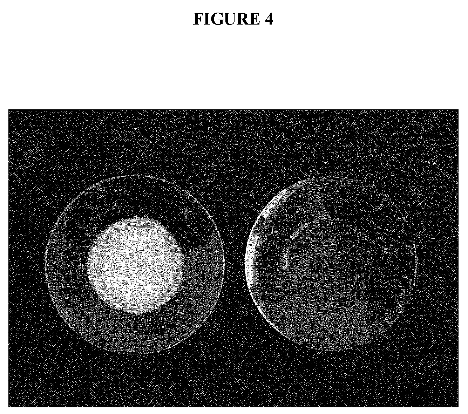

La dissolution dans l'eau du glucide cristallisable ou du mélange de glucides cristallisables et de l'extrait de stévia est totale. L'eau exerce une action d'hydratation au cours de laquelle les molécules de glucide(s) cristallisable(s) et d'extrait de stévia s'entourent d'un cortège de molécules d'eau. La disparition totale des formes solides du glucide cristallisable ou du mélange de glucides cristallisables et de l'extrait de stévia aboutit à un sirop limpide, sans particule solide. Ainsi par exemple, un sirop de rébaudioside A/saccharose dans des proportions 15/85, correspondant à 50% de matière sèche totale, peut être conservé à 20°C à l'air libre pendant 14h sans qu'aucune cristallisation spontanée n'apparaisse. En l'absence de dissolution totale notamment de l'extrait de stévia, le sirop constitué de rébaudioside A et de saccharose soumis à un stress mécanique (agitation, vibration, pression, ...) ou à un stress thermique, notamment un chauffage à 100°C pendant 20 minutes, cristallise et sa viscosité atteint 10 000 cP (figure 4). Cette cristallisation est initiée par la présence d'aiguilles cristallines de rébaudioside A dans le sirop.

Par « dépourvu de germe cristallin », on désigne l'absence de toute initiation de cristallisation. Aucun cristal provenant soit du glucide cristallisable ou du mélange de glucides cristallisables soit de l'extrait de stévia n'est présent dans le susdit sirop. Cette absence de germe cristallin empêche toute cristallisation spontanée et non contrôlée du sirop.

Par « séchage par atomisation », on désigne le processus physique permettant de passer d'une phase continue liquide à une phase dispersée. Le séchage par atomisation est également appelé séchage instantané par atomisation. Dans la présente invention, les gouttelettes sont obtenues par nébulisation du sirop homogène et stable, notamment par une buse de nébulisation ou une turbine. Ces gouttelettes sont ensuite déshydratées. Cette déshydratation s'effectue par exemple grâce à un courant d'air chaud circulant dans la chambre d'atomisation. L'atomisation permet l'obtention de particules de structure amorphe constituées d'un glucide cristallisable ou d'un mélange de glucides cristallisables, d'un extrait de stévia et de moins de 1% d'eau. Ces particules se trouvent dans un état métastable, c'est-à-dire un état physique non figé qui est susceptible d'évoluer au cours du temps vers un état stable, notamment vers un état cristallin.

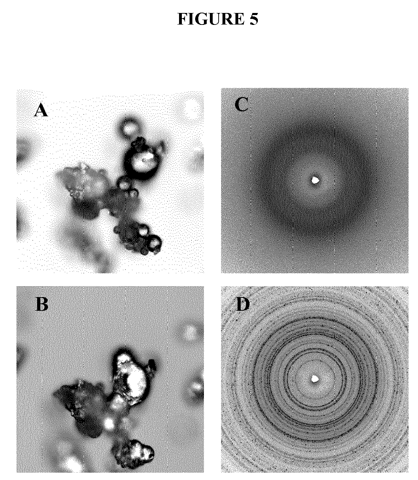

Par « particules de structure amorphe », on désigne des particules d'aspect vitreux c'est-à-dire dépourvues de toute organisation moléculaire suffisante pour former un cristal. Les atomes de ces particules ne présentent pas d'arrangement régulier et périodique des atomes permettant une organisation selon l'un des quatorze réseaux spatiaux définis par Bravais. Les particules de structure amorphe de la présente invention possèdent donc une structure dense, peu organisée, similaire à celle des liquides conduisant à un état métastable (figure 5).

Par « cristallisation homogène», on désigne une opération unitaire de génération de solide, notamment un cristal. Dans la présente invention, la répartition de l'extrait de stévia dans la structure cristalline du glucide cristallisable ou du mélange de glucides cristallisables est homogène. Cette répartition homogène de l'extrait de stévia dans le cristal de glucide(s) signifie que la composition pulvérulente est identique indépendamment de la granulométrie des particules qui la composent.

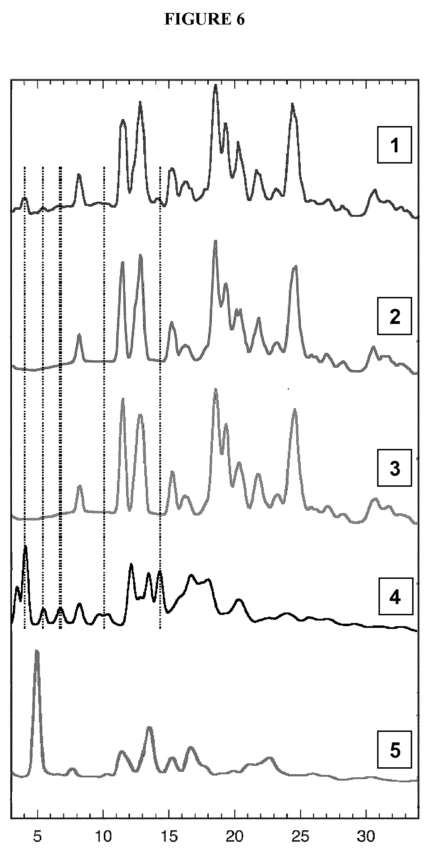

Les compositions de la présente invention ont été analysées par diffraction des rayons X (figure 6). L'image de diffraction résultant d'une composition pulvérulente formée d'une phase cristalline est constituée de cercles spécifiques de cette phase. Un diffractogramme constitue par conséquent une empreinte digitale d'une structure cristalline.

Les compositions de la présente invention ont également été analysées en solution par HPLC afin d'en identifier les différents constituants. La méthode d'analyse est définie dans le document FAO JECFA Monographs 10, 2010, Monographie des glycosides de stéviol.

Le procédé de séchage par atomisation implique une étape de nébulisation du sirop homogène et stable constitué d'un extrait de stévia, d'un glucide cristallisable ou d'un mélange de glucides cristallisables et d'eau dans la tour de séchage, également appelée tour d'atomisation. La nébulisation consiste à diviser le sirop homogène et stable en fines gouttelettes. Afin de ne pas obstruer les buses de nébulisation, il est avantageux d'abaisser la viscosité du sirop afin d'obtenir un brouillard de fines gouttelettes dont la taille varie de 10 à 300 microns.

Selon un mode de réalisation particulier, dans le susdit procédé de fabrication de l'invention, l'étape de séchage par atomisation est précédée d'une étape de chauffage flash à 95°C du susdit sirop homogène et stable, de viscosité inférieure à 50 cP, constitué du susdit extrait de stévia, du susdit glucide cristallisable ou du susdit mélange de glucides cristallisables et d'eau, dépourvu de germe cristallin, permettant d'abaisser la viscosité du susdit sirop homogène et stable à une viscosité inférieure à 10cP, sans modification substantielle de la teneur en eau du susdit sirop homogène et stable.

Le chauffage du sirop est effectué *in situ,* dans les canalisations conduisant aux buses d'atomisation. Cependant, cette étape de chauffage est instantanée (« flash »), de l'ordre de quelques secondes et ne doit provoquer aucune évaporation d'eau du sirop qui pourrait aboutir à l'initialisation d'une cristallisation. Cette étape de chauffage ne modifie pas la composition du susdit sirop homogène et stable.

Dans le susdit procédé de fabrication, la cristallisation homogène des susdites particules de structure amorphe constituées d'un glucide cristallisable ou d'un mélange de glucides cristallisables, d'un extrait de stévia et d'eau s'effectue à l'air libre, ou non.

Par « à l'air libre ou non», on signifie la possibilité d'effectuer la cristallisation dans des conditions ambiantes de température variant de 10 à 35°C et d'humidité relative variant de 40 à 70 %. Il est également envisageable de réaliser cette cristallisation directement dans le contenant qui sert d'emballage à la composition pulvérulente pour son usage ultérieur. Ainsi, la cristallisation peut être effectuée dans des sacs (papier, plastique), des cartons ou tout autre contenant approprié aux conditionnement des sucres et édulcorants.

Dans la mise en oeuvre du procédé de l'invention, la préparation du susdit sirop homogène et stable constitue une étape importante.

Dans le susdit procédé de fabrication, le sirop homogène et stable de viscosité inférieure à 50cP constitué du susdit extrait de stévia, du susdit glucide cristallisable ou du susdit mélange de glucides cristallisables et d'eau, dépourvu de germe cristallin est préparé par :
- mélange d'une solution aqueuse du susdit extrait de stévia, dans laquelle celui-ci est complètement solubilisé, et d'une solution aqueuse du susdit glucide cristallisable, dans laquelle celui-ci est complètement solubilisé, ou du susdit mélange de glucides cristallisables, dans laquelle ceux-ci sont complètement solubilisés, pour obtenir un sirop homogène et stable de viscosité inférieure à 50cP constitué du susdit extrait de stévia, du susdit glucide cristallisable ou du susdit mélange de glucides cristallisables et d'eau, dépourvu de germe cristallin,
- conservation éventuelle du sirop homogène et stable de viscosité inférieure à 50cP, constitué du susdit extrait de stévia, du susdit glucide cristallisable ou du susdit mélange de glucides cristallisables et d'eau, dépourvu de germe cristallin, obtenu à l'étape précédente, à une température inférieure à 50°C, notamment inférieure à 20°C.

L'ordre de mélange des solutions aqueuses d'extrait de stévia et de(s) glucide(s) cristallisable(s) est indifférent. La solution aqueuse d'extrait de stévia peut être ajoutée à la solution aqueuse de(s) glucide(s) cristallisable(s). La solution aqueuse de(s) glucide(s) cristallisable(s) peut être ajoutée à la solution aqueuse d'extrait de stévia. Le mélange des solutions aqueuses peut être effectué par des moyens mécaniques (rotor, agitateur, ...) permettant une agitation lente n'excédant pas 100 tr/min. L'homogénéité du mélange peut être contrôlée par comparaison de la valeur de matière sèche (° Brix) de deux échantillons prélevés à des endroits distincts de la cuve, par exemple à la surface et en fond de cuve. Les deux mesures doivent être identiques. L'échelle de Brix sert à mesurer en degrés Brix (°B) la fraction de saccharose dans un liquide, c'est-à-dire le pourcentage de matière sèche soluble.

Chacune des solutions aqueuses entrant dans la composition du susdit sirop est préparée séparément dans des conditions opératoires parfaitement maîtrisées. Le but est d'éviter la formation de cristaux dans ces solutions.

Ainsi, la solution aqueuse de l'extrait de stévia peut-être préparée par :
- dissolution dans l'eau du susdit extrait de stévia à une concentration de 5% à 25% de matière sèche, dans des conditions permettant la solubilisation complète de l'extrait de stévia, et notamment à une température comprise de 20°C à 100°C, notamment de 90°C à 100°C, en particulier de 95°C à 100°C.

Ainsi, la solution aqueuse du glucide cristallisable ou du mélange de glucides cristallisables peut être préparée par :
- dissolution dans l'eau du susdit glucide cristallisable ou du susdit mélange de glucides cristallisables à une concentration de 40% à 95% de matière sèche, dans des conditions permettant la solubilisation complète du susdit glucide cristallisable ou du susdit mélange de glucides cristallisables, et notamment à une température comprise de 0°C à 110°C, notamment de 30°C à 95°C.

Par « solubilisation complète», on désigne l'absence de cristaux ou de tout germe cristallin dans la solution aqueuse. La vérification d'absence de cristaux s'effectue sous microscope optique ou par mesure de la turbidité de la solution aqueuse. Chacune des solutions aqueuses ne doit pas être concentrée au-delà de la limite de saturation imposée par chacun des constituants pour éviter la formation de cristaux et la cristallisation spontanée.

Dans le susdit procédé de fabrication, le sirop homogène et stable de viscosité inférieure à 50cP comprenant le susdit extrait de stévia, le susdit glucide cristallisable ou le susdit mélange de glucides cristallisables et de l'eau, dépourvu de germe cristallin peut également être préparé par :
- mélange d'une solution aqueuse du susdit glucide cristallisable, dans laquelle celui-ci est complètement solubilisé, ou du susdit mélange de glucides cristallisables, dans laquelle ceux-ci sont complètement solubilisés, avec le susdit extrait de stévia sous forme solide, dans un proportion inférieure à la limite de saturation de la solution aqueuse, pour obtenir un sirop homogène et stable de viscosité inférieure à 50cP comprenant le susdit extrait de stévia complètement solubilisé, le susdit glucide cristallisable ou le susdit mélange de glucides cristallisables et de l'eau, dépourvu de germe cristallin,
- conservation éventuelle du sirop homogène et stable de viscosité inférieure à 50cP, comprenant le susdit extrait de stévia, le susdit glucide cristallisable ou le susdit mélange de glucides cristallisables et de l'eau, dépourvu de germe cristallin, obtenu à l'étape précédente, à une température inférieure à 50°C, notamment inférieure à 20°C.

Le susdit glucide cristallisable ou le susdit mélange de glucides cristallisables, et le susdit extrait de stévia sont complètement solubilisés dans le susdit sirop homogène et stable.

Selon un mode de réalisation particulier, l'étape de séchage par atomisation du procédé de l'invention comprend les étapes suivantes :
- pulvérisation du susdit sirop homogène et stable de viscosité inférieure à 50cP, notamment inférieure à 10cP, comprenant le susdit extrait de stévia, le susdit glucide cristallisable ou le susdit mélange de glucides cristallisables et de l'eau, dépourvu de germe cristallin, pour former des gouttelettes du susdit sirop,
- séchage par atomisation des gouttelettes telles qu'obtenues à l'étape précédente, notamment par un flux continu d'air chaud à une température de 90°C à 190°C à l'entrée du sécheur et à une température de 85°C à 110°C à la sortie du sécheur pour obtenir des particules de structure amorphe comprenant le susdit glucide cristallisable ou le susdit mélange de glucides cristallisables, le susdit extrait de stévia et de moins de 1% d'eau,
- séchage des particules obtenues à l'étape précédente en présence d'amorces de séchage, lesdites amorces étant constituées notamment du susdit glucide cristallisable ou du susdit mélange de glucides cristallisables ayant servi à la préparation du susdit sirop homogène et stable de viscosité inférieure à 50cP, sur un lit fixe d'air chaud avec une température comprise de 50°C à 95°C,
- refroidissement des particules obtenues à l'étape précédente à une température inférieure à 35°C, notamment sur un lit fluidisé d'air chauffé à 20°C.

Les amorces de séchage peuvent également provenir d'un autre batch de production des compositions pulvérulentes de l'invention. Dans ce cas, les amorces de séchage contiennent des cristaux comprenant un extrait de stévia et un glucide cristallisable ou un mélange de glucides cristallisables et moins de 1% d'eau.

Selon un mode de réalisation particulier, le procédé de fabrication d'une composition pulvérulente de l'invention comprend les étapes de :
- mélange d'une solution aqueuse du susdit extrait de stévia, dans laquelle celui-ci est complètement solubilisé et d'une solution aqueuse du susdit glucide cristallisable, dans laquelle celui-ci est complètement solubilisé ou d'une solution aqueuse du susdit mélange de glucides cristallisables, dans laquelle ceux-ci sont complètement solubilisés pour obtenir un sirop homogène et stable de viscosité inférieure à 50cP, constitué du susdit extrait de stévia et du susdit glucide cristallisable ou du susdit mélange de glucides cristallisables et d'eau, dépourvu de germe cristallin,
- conservation éventuelle du susdit sirop homogène et stable de viscosité inférieure à 50cP, comprenant le susdit extrait de stévia, le susdit glucide cristallisable ou le susdit mélange de glucides cristallisables et de l'eau, dépourvu de germe cristallin, obtenu à l'étape précédente à une température inférieure à 50°C, notamment inférieure à 20°C,
- chauffage flash à 95°C du susdit sirop homogène et stable de viscosité inférieure à 50cP, comprenant le susdit extrait de stévia et le susdit glucide cristallisable ou le susdit mélange de glucides cristallisables et de l'eau, dépourvu de germe cristallin, permettant d'abaisser la viscosité du susdit sirop homogène et stable à une viscosité inférieure à 10cP, sans modification substantielle de la teneur en eau du susdit sirop homogène et stable,
- pulvérisation du susdit sirop homogène et stable de viscosité inférieure à 50cP, notamment inférieure à 10cP, comprenant le susdit extrait de stévia, le susdit glucide cristallisable ou le susdit mélange de glucides cristallisables et de l'eau, dépourvu de germe cristallin, pour former des gouttelettes du susdit sirop,
- séchage par atomisation des gouttelettes obtenues à l'étape précédente, notamment par un flux continu d'air chaud à une température de 90°C à 190°C à l'entrée du sécheur et à une température de 85°C à 110°C à la sortie du sécheur pour obtenir des particules de structure amorphe comprenant le susdit glucide cristallisable ou le susdit mélange de glucides cristallisables, le susdit extrait de stévia et moins de 1% d'eau,
- séchage des particules obtenues à l'étape précédente en présence d'amorces de séchage, lesdites amorces étant constituées notamment du susdit glucide cristallisable ou du susdit mélange de glucides cristallisables ayant servi à la préparation du susdit sirop homogène et stable de viscosité inférieure à 50cP, sur un lit fixe d'air chaud avec une température comprise de 50°C à 95°C,
- refroidissement des particules obtenues à l'étape précédente à une température inférieure à 35°C, notamment sur un lit fluidisé d'air chauffé à 20°C,
- cristallisation homogène du susdit extrait de stévia et du susdit glucide cristallisable ou du susdit mélange de glucides cristallisables formant les particules obtenues à l'étape précédente à l'air libre ou non.

Selon un mode de réalisation particulier, l'invention concerne un procédé de fabrication d'une composition pulvérulente à base de rébaudioside A et de saccharose comprenant les étapes suivantes :
- mélange d'une solution aqueuse de rébaudioside A, à une concentration de 5% à 25% de matière sèche, préparée à une température comprise de 20°C à 100°C, notamment de 90°C à 100°C, en particulier de 95°C à 100°C, dans laquelle le rébaudioside A est complètement solubilisé et d'une solution aqueuse de saccharose à une concentration de 40% à 95% de matière sèche, préparée à une température comprise de 10°C à 110°C, notamment de 30°C à 95°C, dans laquelle le saccharose est complètement solubilisé pour obtenir un sirop homogène et stable de viscosité inférieure à 50cP, constitué de rébaudioside A, de saccharose et d'eau, dépourvu de germe cristallin, la matière sèche totale du sirop étant inférieure à 60%,
- conservation éventuelle du susdit sirop homogène et stable de viscosité inférieure à 50cP, constitué de rébaudioside A, de saccharose et d'eau, dépourvu de germe cristallin, obtenu à l'étape précédente à une température inférieure à 50°C, notamment inférieure à 20°C,
- chauffage flash à 95°C du susdit sirop homogène et stable de viscosité inférieure à 50cP, constitué de rébaudioside A, de saccharose et d'eau, dépourvu de germe cristallin, permettant d'abaisser la viscosité du susdit sirop homogène et stable à une viscosité inférieure à 10cP, sans modification substantielle de la teneur en eau du susdit sirop homogène et stable,
- pulvérisation du susdit sirop homogène et stable de viscosité inférieure à 50cP, notamment inférieure à 10cP, constitué de rébaudioside A, de saccharose et d'eau, dépourvu de germe cristallin, pour former des gouttelettes du susdit sirop,
- séchage par atomisation des gouttelettes obtenues à l'étape précédente, notamment par un flux continu d'air chaud à une température de 90°C à 190°C à l'entrée du sécheur et à une température de 85°C à 110°C à la sortie du sécheur pour obtenir des particules de structure amorphe constituées de rébaudioside A, de saccharose et de moins de 1% d'eau,
- séchage des particules obtenues à l'étape précédente en présence d'amorces de séchage, lesdites amorces étant constituées notamment de saccharose, sur un lit fixe d'air chaud avec une température comprise de 50°C à 95°C,
- refroidissement des particules obtenues à l'étape précédente à une température inférieure à 35°C, notamment sur un lit fluidisé d'air chauffé à 20°C,
- cristallisation homogène du susdit rébaudioside A et du susdit saccharose formant les particules obtenues à l'étape précédente à l'air libre, ou non.

La solution aqueuse de saccharose est préparée dans des concentrations inférieures à la limite de saturation de ce glucide afin d'éviter la formation de cristaux de sucre.

Le sirop, une fois homogène et stable ne doit plus être soumis à aucun stress mécanique (agitation, vibration, pression, ...) ou thermique (chauffage, refroidissement) afin d'éviter toute formation de cristaux. De plus, ce sirop doit être conservé à l'abri de toute contamination de cristaux de saccharose ou de rébaudioside A.

Afin d'améliorer les propriétés organoleptiques des cristaux obtenus, il est possible d'ajouter un additif dans le procédé de fabrication de l'invention.

Dans le susdit procédé de fabrication de l'invention, un additif peut être ajouté à l'étape de :
- mélange de la susdite solution aqueuse du susdit extrait de stévia, dans laquelle celui-ci est complètement solubilisé et de la susdite solution aqueuse du susdit glucide cristallisable, dans laquelle celui-ci est complètement solubilisé ou de la susdite solution aqueuse du susdit mélange de glucides cristallisables, dans laquelle ceux-ci sont complètement solubilisés pour obtenir un sirop homogène et stable de viscosité inférieure à 50cP, constitué du susdit extrait de stévia, du susdit glucide cristallisable ou du susdit mélange de glucides cristallisables et d'eau, dépourvu de germe cristallin,
et/ou
- conservation éventuelle du susdit sirop homogène et stable de viscosité inférieure à 50cP, constitué du susdit extrait de stévia, du susdit glucide cristallisable ou du susdit mélange de glucides cristallisables et d'eau, dépourvu de germe cristallin, à une température inférieure à 50°C, notamment inférieure à 20°C.

De préférence, l'additif est ajouté au sirop de saccharose-rébaudioside A avant l'étape de séchage par atomisation.

Parmi touts les additifs bien connus de l'homme du métier, certains d'entre eux présentent plus particulièrement des synergies avec l'extrait de stévia. Cette synergie repose notamment sur le pouvoir sucrant d'autres oses ou d'autres édulcorants.

Ainsi selon un mode de réalisation particulier, l'invention concerne un procédé tel que précédemment décrit, dans lequel l'additif est choisi parmi le glucose, le fructose, le sucre inverti, l'érythritol, les fructooligosaccharides, les oligofructoses, les matodextrines, le caramel, le caramel décoloré et déodorisé, le maltol, des arômes masquant d'arrières goût, la thaumatine, la néohespéridine dihydrochalcone, l'acésulfame de potassium, l'aspartame et le cyclamate.

Selon un mode de réalisation plus particulier, l'invention concerne un procédé tel que précédemment décrit, dans lequel l'additif est la thaumatine.

Selon un mode de réalisation plus particulier, l'invention concerne un procédé de fabrication d'une composition pulvérulente à base de rébaudioside A, de saccharose et de thaumatine comprenant les étapes suivantes :
- mélange d'une solution aqueuse de saccharose à une concentration de 40 à 95 % de matière sèche, préparée à une température comprise de 10°C à 110°C, notamment de 30°C à 95°C, dans laquelle le saccharose est complètement solubilisé avec du rébaudioside A sous forme solide et de la thaumatine sous forme solide, dans un proportion inférieure à la limite de saturation de la solution aqueuse, pour obtenir un sirop homogène et stable dans lequel le rébaudioside A et la thaumatine sont complêtement solubilisés, de viscosité inférieure à 50 cP, constitué de rébaudioside A, de saccharose, de thaumatine et d'eau, dépourvu de germe cristallin, la matière sèche totale du sirop étant inférieure à 60 %,
- conservation éventuelle du susdit sirop homogène et stable de viscosité inférieure à 50 cP, constitué de rébaudioside A, de saccharose, de thaumatine et d'eau, dépourvu de germe cristallin, obtenu à l'étape précédente à une température inférieure à 50°C, notamment inférieure à 20°C,
- chauffage flash à 60°C du susdit sirop homogène et stable de viscosité inférieure à 50 cP, constitué de rébaudioside A, de saccharose, de thaumatine et d'eau, dépourvu de germe cristallin, permettant d'abaisser la viscosité du susdit sirop homogène et stable à une viscosité inférieure à 10cP, sans modification substantielle de la teneur en eau du susdit sirop homogène et stable,
- pulvérisation du susdit sirop homogène et stable de viscosité inférieure à 50cP, notamment inférieure à 10cP, constitué de rébaudioside A, de saccharose, de thaumatine et d'eau, dépourvu de germe cristallin, pour former des gouttelettes du susdit sirop,
- séchage par atomisation des gouttelettes obtenues à l'étape précédente, notamment par un flux continu d'air chaud à une température de 90°C à 190°C à l'entrée du sécheur et à une température de 80°C à 110°C à la sortie du sécheur pour obtenir des particules de structure amorphe constituées de saccharose, de rébaudioside A, de thaumatine et de moins de 1% d'eau,
- séchage des particules obtenues à l'étape précédente en présence d'amorces de séchage, lesdites amorces étant constituées notamment de saccharose, sur un lit fixe d'air chaud avec une température comprise de 50°C à 95°C,
- refroidissement des particules obtenues à l'étape précédente à une température inférieure à 35°C, notamment sur un lit fluidisé d'air chauffé à 20°C,
- cristallisation homogène du susdit saccharose, du susdit rébaudioside A et de la susdite thaumatine formant les particules obtenues à l'étape précédente à l'air libre, ou non.

Le saccharose, le rébaudioside A et la thaumatine sont complètement solubilisés dans le susdit sirop homogène et stable.

La présente invention concerne également des cristaux comprenant au moins un glucide cristallisable ou un mélange de glucides cristallisables et un extrait de stévia tel qu'obtenus par mise en oeuvre du procédé selon l'invention.

La présente invention concerne également des cristaux d'un glucide cristallisable ou d'un mélange de glucides cristallisables, d'un extrait de stévia et de thaumatine tel qu'obtenus par mise en oeuvre du procédé selon l'invention.

La présente invention concerne également des particules de structure amorphe comprenant au moins un glucide cristallisable ou un mélange de glucides cristallisables, un extrait de stévia et moins de 1% d'eau, telles qu'obtenues à l'étape de séchage par atomisation du procédé selon la présente invention.

Les compositions pulvérulentes décrites ci-avant et les mélanges décrits ci-avant ont des propriétés organoleptiques améliorées par rapport au même extrait de stévia seul, ou par rapport à un mélange physique du même extrait de stévia et du glucide ou encore par rapport au même extrait de stévia enrobant le glucide. Il est par conséquent avantageux de les utiliser comme édulcorant.

L'invention concerne donc également l'utilisation d'une composition pulvérulente de l'invention ou d'un mélange de l'invention, comme agent édulcorant.

Parmi tous les usages possibles, la composition pulvérulente de l'invention ou le mélange de l'invention est utilisable comme agent édulcorant notamment dans :
- des préparations alimentaires liquides telles que les produits lactés, les boissons, les jus de fruits ou les sorbets,
- dans des préparations alimentaires solides telles que les pâtisseries, les biscuits, ou les viennoiseries, les confiseries, les chocolats,
- des préparations alimentaires semi-liquides telles que les produits à tartiner, les yoghourts, les laitages et les glaces,
- des préparations alimentaires sous forme d'émulsions telles que les sauces,
- des poudres comme les soupes déshydratées et les sauces déshydratées, les boissons déshydratées, le lait en poudre, le chocolat en poudre, les boissons instantanées en poudre, les produits de remplacement de repas ou les produits effervescents,
- des préparations pharmaceutiques,
- des sachets doses, sirop à sec, préparations pulvérulentes pour granulation et compression.

Parmi tous les usages possibles, la composition pulvérulente de l'invention contenant du saccharose, du rébaudisoside A et de la thaumatine est utilisable comme agent édulcorant notamment dans les préparations alimentaires, notamment les boissons, ou les préparations pharmaceutiques.

### Description des figures

**Figure 1**
   La figure 1 représente des courbes comparatives de la résistance des comprimés (en MPa) en fonction de la force de compression (en kN). La courbe 1 correspond à la composition pulvérulente de l'exemple 3, la courbe 2 correspond à l'Alvéosucre^{®} (Téréos), la courbe 3 correspond à une solution saccharose séchée par atomisation et la courbe 4 correspond au DiPac^{®}(Domino).
   - en abscisse : la force de compression exercée sur le comprimé en kN
   - en ordonnée : la résistance du comprimé à l'écrasement en MPa
   Les résultats obtenus montrent que la composition pulvérulente de l'exemple 3 présente des résistances comparables à celles de l'Alvéosucre^{®} mais supérieures à celles du saccharose seul ou du DiPac^{®} pour une force de compression donnée.
**Figure 2**
   La figure 2 représente des courbes comparatives de la force d'éjection (en N) à laquelle répondent des comprimés obtenus en fonction de la force de compression en (kN). La courbe 1 correspond à la composition pulvérulente de l'exemple 3, la courbe 2 correspond à l'Alvéosucre^{®}, la courbe 3 correspond à une solution saccharose séchée par atomisation et la courbe 4 correspond au DiPac^{®}.
   - en abscisse : la force de compression exercée sur le comprimé en kN
   - en ordonnée : la force d'éjection en N
   Les résultats obtenus montrent que les performances de la composition pulvérulente de l'exemple 3 sont supérieures à celles des produits commerciaux Alvéosucre^{®}, ou DiPac^{®} ou supérieures à celles du saccharose seul, en terme de force d'éjection pour une force de compression donnée.
**Figure 3**
   La figure 3 représente la distribution granulométrique d'une composition pulvérulente de rébaudioside A-saccharose : la figure 3-A correspond à la composition de l'exemple 1, la figure 3-B correspond à la composition de l'exemple 2 et la figure 3-C correspond à la composition de l'exemple 3 de la présente invention.
   - en abscisse : la taille des particules en µm
   - en ordonnée droite : le pourcentage de particules
   Les résultats montrent que la composition pulvérulente de l'exemple 1 est bimodale avec une première population comprenant 30 % des particules qui possèdent un diamètre médian D(v,0.5) d'environ 30 µm et une seconde population comprenant 10 % des particules qui possèdent un diamètre médian d'environ 300 µm.
   Les résultats montrent que la composition pulvérulente de l'exemple 2 comporte 45 % des particules possédant un diamètre médian D(v,0.5) d'environ 150 µm.
   Les résultats montrent que la composition pulvérulente de l'exemple 3 comporte 60 % des particules possédant un diamètre médian D(v,0.5) d'environ 200 µm.
**Figure 4**
   La figure 4 illustre la notion de « homogène et stable » pour un sirop de saccharose-rébaudioside A. Un sirop de saccharose-rébaudioside A 85/15 a été :
   - séché à l'air libre à 20°C pendant 14h (coupelle de droite : sirop homogène et stable)
   - séché dans une étuve à 100°C pendant 20 min., puis séché à l'air libre à 20°C pendant 14h (coupelle de gauche : sirop cristallisé).
   Les résultats montrent qu'un sirop de saccharose/rébaudioside A 85/15 conservé à l'air libre reste limpide alors que le même sirop soumis à un stress thermique cristallise.
**Figure 5**
   La figure 5 montre la différence de réfringence des particules de structure amorphe, avant et après cristallisation, soumises à une lumière directe en microscopie optique.
   Les particules de structure amorphes obtenues à l'issue du séchage par atomisation (fig. 5-A) présentent un degré de réfringence à la lumière inférieur à celui des mêmes particules après que la cristallisation a eu lieu (fig. 5-B).
   Les diffractogrammes correspondants illustrent l'état amorphe (fig. 5-C) et l'état cristallin (fig. 5-D) de ces deux formes.
**Figure 6**
   La figure 6 représente des diffractogrammes des rayons X obtenus à partir de compositions pulvérulentes. Le diffractogramme 1 correspond à un mélange physique des poudres de saccharose et de rébaudioside A, le diffractogramme 2 correspond à la composition pulvérulente de l'exemple 2, le diffractogramme 3 correspond au saccharose pur, le diffractogramme 4 correspond au rébaudioside A recristallisé dans l'eau et le diffractogramme 5 correspond au rébaudioside A sous sa forme anhydre.
   - en abscisse : balayage en ° 2 Thêta (θ)
   - en ordonnée : l'intensité diffractée en unité arbitraire
   Les pics caractéristiques du rébaudioside A en position 4°, 5,5°, 6,5°, 10° et 14° sont bien présents dans le mélange physique des deux poudres (diffractogramme 1). A l'inverse, aucun pic caractéristique du rébaudioside A n'est détectable dans la composition pulvérulente (exemple 2) de l'invention (diffractogramme 2) ; seuls les pics caractéristiques du saccharose (diffractogramme 3) sont détectés.
**Figure 7**

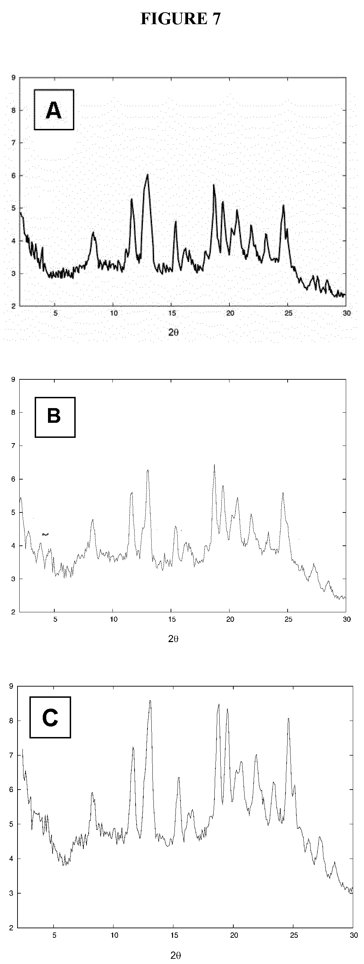

   La figure 7 représente des diffractogrammes des rayons X obtenus à partir de compositions pulvérulentes. Le diffractogramme A correspond à la composition pulvérulente de l'exemple 6 immédiatement après sa fabrication, le diffractogramme B correspond à la composition pulvérulente de l'exemple 6 conservé pendant 8 mois après sa fabrication, le diffractogramme C correspond au saccharose pur.
   - en abscisse : balayage en degré ° 2 Thêta (θ)
   - en ordonnée : l'intensité diffractée en unité arbitraire
   Les pics caractéristiques du rébaudioside A en position 4°, 5,5°, 6,5°, 10° et 14° ne sont pas détectables dans la composition pulvérulente (exemple 6) de l'invention (diffractogrammes A et B) ; seuls les pics caractéristiques du saccharose sont détectés.
**Figure 8**

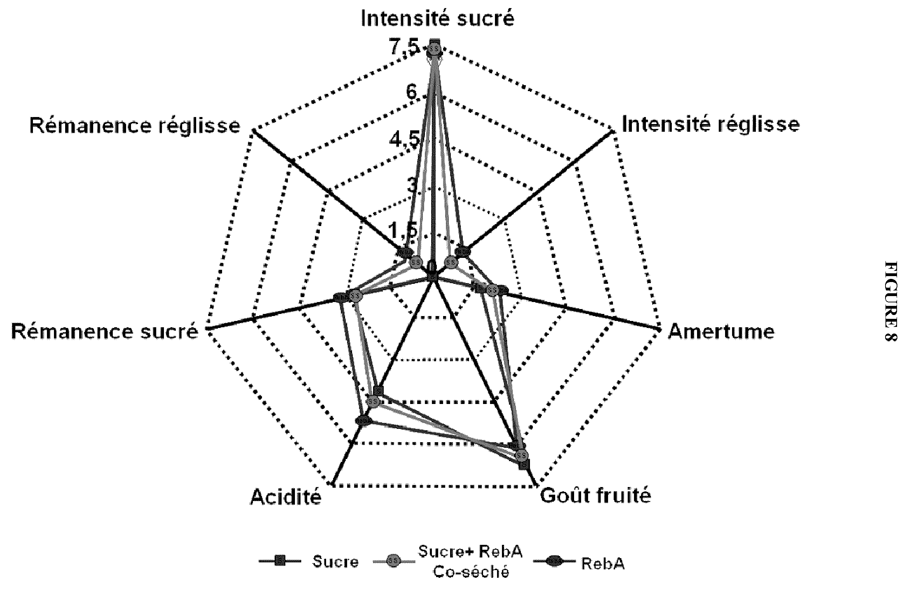

   La figure 8 représente l'analyse sensorielle réalisée sur trois formulations de confiture allégée de fraise. Les descripteurs analysés sont : l'intensité sucrée, l'intensité réglisse, l'amertume, le goût fruité, l'acidité, la rémanence sucré et la rémanence réglisse. Les trois formulations correspondent respectivement à une confiture élaborée avec :
   - (S) : du saccharose,
   - (SS) : un mélange de poudre de saccharose et de poudre de rébaudioside A-saccharose co-séchés, et
   - (reb A) : un mélange de poudre de saccharose et de poudre de rébaudioside A.

### Partie expérimentale

### Exemple 1

### 1.1 - Préparation de la solution de rébaudioside A/saccharose

40 grammes de rébaudioside A (anhydre, 98% de pureté) sont mis en solution, sous agitation, dans 160 gr d'eau déminéralisée chauffée à 95 - 100°C. La solution est ensuite ajoutée à 530 grammes d'un sirop de saccharose à 68° brix et maintenue à 20°C. La solution finale de 55° brix a une composition en matière sèche de 10% de rébaudioside A pour 90% de saccharose et est maintenue à une température inférieure à 20°C.

### 1.2 - Séchage de la solution rébaudioside A/saccharose

Le séchage est réalisé dans un sécheur de laboratoire (B-190 Mini Spray Dryer, Büchi Labortechnik, Switzerland). La solution est nébulisée par une buse pneumatique avec un débit de 172 grammes de sirop/heure. La température de séchage est de 190°C.

Les caractéristiques de la poudre obtenue sont les suivantes :

| | |
|---|---|
| Teneur en Rébaudioside A (% ms) | 9,8 % |
| Teneur en Saccharose (% ms) | 90,2 % |
| Humidité résiduelle | 0,85 % |
| Taille des particules D(v,0.5) | 27 µm |
| Densité apparente non tassée | 0,72 g/ml |
| Point de fusion | 185°C |

La poudre est à l'état amorphe par absence de cristaux (amorces de cristallisation). Conservée à 20°C et entre 40 et 60% HR pendant plus de 30 jours, le produit cristallise et le point de fusion de la poudre est de 188°C.

### Exemple 2

### 2.1 - Préparation de la solution de rébaudioside A/saccharose

### Solution 1 : solution de saccharose

300 kg de saccharose sont dissous dans 141 kg d'eau osmosée. La solution est maintenue à 10°C.

### Solution 2 : solution de rébaudioside A

A 189 kg d'eau osmosée chauffée à 95 - 100°C sont ajoutés 33,3 kg de rébaudioside A (anhydre à 98% de pureté). Le mélange est gardé sous agitation pendant 60 minutes pour obtenir une solubilisation totale du rébaudioside A. L'absence de cristaux a été contrôlée par observation au microscope optique.

### Solution 3 : solution de rébaudioside A/saccharose

La solution 2 est mélangée sous agitation lente (environ 5 tr/mn) à la solution 1 maintenue à 10°C. Le mélange est effectué à une température de 32°C. Ledit mélange constitue la solution 3. La solution 3 est conservée à une température inférieure à 20°C pendant le séchage.

### 2.1 - Séchage de la solution 3

Introduction de 15 kg de poudre issue du co-séchage rébaudioside A/saccharose obtenue d'un précédent séchage (A défaut, il est possible d'utiliser du sucre fin avec ouverture moyenne de 250 µm) dans une tour de séchage type MSD (Multi-Stage Dryer), sécheur à deux temps + refroidisseur. Pendant toute la durée du séchage, la poudre sortant de sécheur + refroidisseur est recyclée et le taux de recyclage est de 0,5 à 1 (rapport poudre/matière sèche du sirop entrant).

Paramètres de fonctionnement :

| | |
|---|---|
| Température de l'air entrée tour | 190°C |
| Température de l'air sortie tour | 110°C |
| Température de l'air entrée lit statique | 90°C |
| Température de l'air entrée lit fluidisé refroidisseur | 20°C |
| Température de la poudre sortie lit refroidisseur | 35°C |
| Débit sirop | 75 kg/h |

Les caractéristiques de la poudre obtenue sont les suivantes :

| | |
|---|---|
| Teneur en Rébaudioside A (% ms) | 9,8 % |
| Teneur en Saccharose (% ms) | 90,2 % |
| Humidité résiduelle | 0,80 % |
| Taille des particules D(v,0.5) | 150 µm |
| Densité apparente non tassée | 0,51 g/ml |
| Point de fusion | 188°C |

### Exemple 3

### 3.1 - Préparation de la solution de rébaudioside A/saccharose

A 4 tonnes de sirop de saccharose à 67°brix obtenues par dissolution du saccharose dans de l'eau osmosée sont ajoutés 1450 kg de solution de rébaudioside A (dissolution de rébaudioside A à 98% de pureté dans de l'eau osmosée) à 10% de matière sèche.

### 3.2 - Séchage de la solution rébaudiosideA-saccharose

Introduction de 500 kg de poudre issue du co-séchage rébaudioside A/saccharose obtenue d'un précédent séchage (A défaut, il est possible d'utiliser du sucre fin avec ouverture moyenne de 250 µm) dans une tour de séchage type MSD (Multi-Stage Dryer), sécheur à deux temps + refroidisseur. Pendant toute la durée du séchage la poudre sortant de sécheur + refroidisseur est recyclée et le taux de recyclage est de 0,5 (rapport poudre/matière sèche du sirop).

Paramètres de fonctionnement :

| | |
|---|---|
| Température de l'air entrée tour | 180°C |
| Température de l'air sortie tour | 110°C |
| Température de l'air entrée lit statique | 90°C |
| Température de l'air entrée lit fluidisé refroidisseur | 20°C |
| Température de la poudre sortie lit refroidisseur | 30°C |
| Débit sirop | 1200 kg/h |

Les caractéristiques de la poudre obtenue sont les suivantes :

| | |
|---|---|
| Teneur en Rébaudioside A (% ms) | 5 % |
| Teneur en Saccharose (% ms) | 95 % |
| Humidité résiduelle | 0,91 % |
| Taille des particules D(v,0.5) | 195 µm |
| Densité apparente non tassée | 0,55 g/ml |
| Point de fusion | 186°C |

### Exemple 4

### 4.1 - Préparation de la solution de saccharose/rébaudioside A/ thaumatine

A 2 tonnes de sirop de saccharose à 67°brix obtenues par dissolution de saccharose dans de l'eau osmosée sont ajoutés 4,4 kg de rébaudioside A à 98% de pureté et 650 mg de thaumatine.

### 4.2 - Séchage de la solution saccharose/rébaudioside A/Thaumatine

Introduction de 500 kg de poudre issue du co-séchage saccharose/rébaudioside A/ thaumatine obtenue d'un précédent séchage (A défaut, il est possible d'utiliser du sucre fin avec ouverture moyenne de 250 µm) dans une tour de séchage type MSD (Multi-Stage Dryer), sécheur à deux temps + refroidisseur. Pendant toute la durée du séchage la poudre sortant de sécheur + refroidisseur est recyclée et le taux de recyclage est de 0,5 (rapport poudre/matière sèche du sirop).

Paramètres de fonctionnement :

| | |
|---|---|
| Température de l'air entrée tour | 140°C |
| Température de l'air sortie tour | 90°C |
| Température de l'air entrée lit statique | 80°C |
| Température de l'air entrée lit fluidisé refroidisseur | 20°C |
| Température de la poudre sortie lit refroidisseur | 35°C |
| Débit sirop | 1200 kg/h |

Les caractéristiques de la poudre obtenue sont les suivantes :

| | |
|---|---|
| Teneur en Rébaudioside A (% ms) | 0,3% |
| Teneur en Saccharose (% ms) | 99,7% |
| Teneur en Thaumatine (% ms) | ND |
| Humidité résiduelle | 0,85 % |
| Taille des particules D(v,0.5) | 190 µm |
| Densité apparente non tassée | 0,55 g/ml |
| Point de fusion | 187°C |
| Pouvoir sucrant* | 2,2 ou 220 |

| | |
|---|---|
| * : par comparaison avec une solution de saccharose ayant un pouvoir sucrant de 1 ou 100. | |

### Exemple 5

### Mélange d'une poudre de saccharose avec une poudre de [saccharose /rébaudioside A]

A 96,6 kg de sucre fin (D (v,0,5) = 280 µm) sont ajoutés 3,4 kg de poudre obtenue par co-cristallisation de saccharose/rébaudioside A avec un dosage de 9/1. Le mélange est réalisé dans un mélangeur Guédu, le temps de mélange est de 5 minutes.

Les caractéristiques de la poudre obtenue sont les suivantes :

| | |
|---|---|
| Teneur en Rébaudioside A (% ms) | |
| Prélèvement 1 | 0,330 % |
| Prélèvement 2 | 0,328 % |
| Prélèvement 3 | 0,329 % |
| Teneur en Saccharose (% ms) | 99,66 % |
| Taille des particules D(v,0,5) | 285 µm |
| Densité apparente non tassée | 0,82 g/ml |
| Pouvoir sucrant* | 2 ou 200 |

| | |
|---|---|
| * : par comparaison avec une solution de saccharose ayant un pouvoir sucrant de 1 ou 100. | |

### Exemple 6

### Etude de la stabilité d'une composition pulvérulente [rébaudioside A 6,4%/saccharose 93,6%]

### 6.1 - Préparation de la solution de rébaudioside A/saccharose

A 2 tonnes de sirop de saccharose à 67°brix obtenues par dissolution du saccharose dans de l'eau osmosée sont ajoutés 815 kg de solution de rébaudioside A (dissolution de rébaudioside A à 98% de pureté dans de l'eau osmosée) à 11,5% de matière sèche.

### 6.2 - Séchage de la solution rébaudiosideA-saccharose

Introduction de 500 kg de poudre issue du co-séchage rébaudioside A/saccharose obtenue d'un précédent séchage (A défaut, il est possible d'utiliser du sucre fin avec ouverture moyenne de 250 µm) dans une tour de séchage type MSD (Multi-Stage Dryer), sécheur à deux temps + refroidisseur. Pendant toute la durée du séchage la poudre sortant de sécheur + refroidisseur est recyclée et le taux de recyclage est de 1 (rapport poudre/matière sèche du sirop).

Paramètres de fonctionnement :

| | |
|---|---|
| Température de l'air entrée tour | 180°C |
| Température de l'air sortie tour | 110°C |
| Température de l'air entrée lit statique | 90°C |
| Température de l'air entrée lit fluidisé refroidisseur | 20°C |
| Température de la poudre sortie lit refroidisseur | 30°C |
| Débit sirop | 85 kg/h |

Les caractéristiques de la poudre obtenue sont les suivantes :

| | |
|---|---|
| Teneur en Rébaudioside A (% ms) | 6,4 % |
| Teneur en Saccharose (% ms) | 93,6 % |
| Humidité résiduelle | 0,90 % |
| Taille des particules D(v,0.5) | 210 µm |
| Densité apparente non tassée | 0,54 g/ml |
| Point de fusion | 186°C |

### 6.3 - Mise en stabilité

La poudre séchée est conditionnée dans des sacs en polyéthylène fermés par thermo soudure et mis dans un carton fermé par une bande adhésive. Les cartons sont conservés dans un local sec et chauffé (Température 18 - 22°C).

### 6.4 - Résultats

Les résultats de l'étude de la stabilité de la composition pulvérulente rébaudioside A 6,4%/saccharose 93,6% sont illustrés à la figure 7. Les diffractogrammes ont été obtenus à partir des poudres respectivement de saccharose (diffractogramme C), de la composition pulvérulente rébaudioside A 6,4%/saccharose 93,6% à T0 (diffractogramme A), c'est-à-dire immédiatement après sa fabrication, et de la composition pulvérulente rébaudioside A 6,4%/saccharose 93,6% à T+8 mois (diffractogramme A), c'est-à-dire 8 mois après qu'elle ait été fabriquée et conservée selon les conditions précisées au point 6.3.

Comme le montrent les diffractogrammes A et B, la structure cristalline de la composition pulvérulente rébaudioside A 6,4%/saccharose 93,6% est comparable à celle du saccharose. En effet, aucun des pics caractéristiques du rébaudioside A en position 4°, 5,5°, 6,5°, 10° et 14° n'est visible sur ces deux diffractogrammes. De plus, aucune modification de structure n'est observable sur la composition pulvérulente rébaudioside A 6,4%/saccharose 93,6% à T+8mois.

Ces résultats montrent que la structure cristalline de la composition pulvérulente rébaudioside A 6,4%/saccharose 93,6% est stable dans le temps et que le rébaudioside A reste bien sous forme amorphe dans le cristal de saccharose.

### Exemple 7

### Analyse sensorielle d'une confiture allégée fabriquée avec la composition pulvérulente rébaudioside A 6,4%/saccharose 93,6%

Une confiture classique faite à partir de 50% de fruit et 50% de saccharose ajouté + gélifiant contient 59% de matière sèche.

Pour une confiture allégée, la réduction calorique doit être d'au moins 30%. Dans les formulations précisées ci-après, les confitures allégées contiennent 39% de matière sèche.

### 7.1 - Protocole de fabrication d'une confiture ménagère.

A un kilogramme de fruits préparés, on ajoute le sucre, le gélifiant et éventuellement un conservateur. L'ensemble est maintenu à ébullition et sous agitation pendant 3 minutes environ permettant une évaporation de 120 grammes d'eau.

### 7.2 - Formulations de confiture allégée de fraises

Trois formulations différentes de confiture allégée de fraise ont été mises au point. La confiture « contrôle » a été élaborée avec du sucre comme seule source sucrante ; la confiture « rébaudioside A » a été élaborée avec un mélange de poudre de sucre et de poudre de rébaudioside A ; la confiture «Rébaudioside A - Sucre co-séchés » a été élaborée avec un mélange de poudre de sucre et de poudre de Rébaudioside A 6,4% - Sucre 93,6% co-séchés.

La liste des ingrédients ainsi que leur proportion en masse est indiquée dans les tableaux suivants :

| **Contrôle : sucre (S)** | | |
|---|---|---|
| | | Masse (g) |
| | Saccharose | 608 |
| | Pectines | 10,5 |
| | Acide citrique | 4 |
| | Acide sorbique | 0,525 |
| | TOTAL | 623 |
| Fraises | | 1000 |
| | Total mise en oeuvre | 1623 |
| | % matière sèche | 39 |

| **Rébaudioside A (reb A)** | | |
|---|---|---|
| | | Masse (g) |
| | Saccharose | 484,6 |
| | Pectines | 10,5 |
| | Acide citrique | 4 |
| | Acide sorbique | 0,525 |
| | Rébaudioside A | 0,4 |
| | TOTAL | 500 |
| Fraises | | 1000 |
| | Total mise en oeuvre | 1500 |
| | % matière sèche | 39 |

| **Rébaudioside A - Saccharose co-séchés (SS)** | | |
|---|---|---|
| | | Masse (g) |
| | Saccharose | 478,6 |
| | Pectin Amid AF015 | 10,5 |
| | Acide citrique | 4 |
| | Acide sorbique | 0,525 |
| | Rébaudioside A 6,4% - Sucre 93,6% co-séchés | 6,4 |
| | TOTAL | 500 |
| Fraises | | 1000 |
| | Total mise en oeuvre | 1500 |
| | % matière sèche | 39 |

### 7.3 - Résultats

Les résultats de l'analyse sensorielle des différentes formulations de confiture allégée de fraises sont illustrés à la figure 8.

Les confitures maintenues à la même température ont été évalués par un panel expert entrainé de onze personnes pour l'évaluation de produits édulcorés avec des extraits de stévia pour la perception des descripteurs suivants : intensité sucrée, intensité réglisse, amertume, goût fruité, acidité, rémanence sucré et rémanence réglisse.

La confiture allégée de fraises élaborée avec du rébaudioside A 6,4%/saccharose 93,6% présente la même intensité et rémanence sucrée et le même goût fruité que la confiture élaborée avec du saccharose 100%. De plus, l'amertume, l'intensité et la rémanence réglisse de la confiture allégée de fraises élaborée avec du rébaudioside A 6,4%/saccharose 93,6% sont inférieures à celles obtenues pour une confiture allégée de fraises élaborée avec mélange simple de poudre de rebaudioside A et de poudre de saccharose.

Les résultats obtenus montrent une préférence significative pour la version de confiture allégée de fraises contenant du rébaudioside A 6,4%/saccharose 93,6% co-séché selon le procédé de la présente invention par rapport au mélange simple de poudre de rebaudioside A et de poudre de saccharose.

## Revendications

1. Composition pulvérulente de cristaux comprenant :
- des cristaux d'un glucide cristallisable ou d'un mélange de glucides cristallisables à raison d'au moins 80%, en particulier 90% en masse par rapport au poids total de la composition,
- un extrait de stévia à raison de 0,1% à 20%, en particulier de 0,3% à 10% en masse par rapport au poids total de la composition, ledit extrait de stévia sous sa forme amorphe étant encapsulé dans les cristaux du susdit glucide cristallisable ou du susdit mélange de glucides cristallisables,
ladite composition étant dotée d'un pouvoir sucrant supérieur à celui du susdit glucide cristallisable ou du susdit mélange de glucides cristallisables et d'une flaveur dépourvue d'amertume, et ladite composition possédant un point de fusion inférieur à celui du susdit glucide cristallisable ou du susdit mélange de glucides cristallisables.

2. Composition pulvérulente de cristaux selon la revendication 1, dans laquelle le glucide cristallisable est choisi parmi le saccharose, le glucose, le fructose, le lactose, ou un mélange d'au moins deux de ces glucides cristallisables, notamment dans laquelle le glucide cristallisable est le saccharose.

3. Composition pulvérulente de cristaux selon la revendication 1 ou 2, dans lequel l'extrait de stévia est choisi parmi les glycosides de stéviol suivants : rébaudioside A, rébaudioside B, rébaudioside C, rébaudioside D, rébaudioside E, rébaudioside F, stévioside, stéviolbioside et dulcoside A, ou un mélange d'au moins deux de ces glycosides de stéviol, notamment dans laquelle l'extrait de stévia est le rébaudioside A, le taux de rébaudioside A dans l'extrait de stévia étant avantageusement d'au moins 40% et notamment de 90% à 100%.

4. Composition pulvérulente de cristaux selon l'une des revendications 1 à 3, dans laquelle le glucide cristallisable est le saccharose et l'extrait de stévia est le rébaudioside A.

5. Composition pulvérulente de cristaux selon la revendication 4, dans laquelle le rébaudioside A est à une concentration de 0,1 % à 20% ms (matière sèche), en particulier de 0,3% à 10%, en particulier de 0,3% à 5%, en particulier de 5% à 10%, en particulier de 6% à 10% et le saccharose est à une concentration de 80% à 99,9% ms (matière sèche), en particulier de 90% à 99,7%, en particulier de 95% à 99,5%, en particulier de 90% à 95%.

6. Composition pulvérulente de cristaux selon la revendication 4 ou 5, dans laquelle le point de fusion des cristaux varie de 185°C à 188°C pour une composition pulvérulente comprenant de 90% à 99,7% de saccharose et 0,3% à 10% de rébaudioside A.

7. Composition pulvérulente de cristaux selon l'une quelconque des revendications 4 à 6, laquelle possède lorsqu'elle est comprimée une résistance comprise de 1 à 2,2 MPa pour une force de compression variant de 15 à 25 kN et une force d'éjection comprise de 70 à 106 N pour une force de compression variant de 15 à 25 kN, et/ou dans laquelle le pouvoir sucrant est de 2 fois à 65 fois supérieur à celui du glucide cristallisable ou du mélange de glucides cristallisables, et/ou dans laquelle la distribution granulométrique moyenne des cristaux varie de 140 µm à 200 µm, et/ou dans laquelle la teneur en eau est inférieure ou égale à 1% en masse par rapport au poids total de la composition.

8. Composition pulvérulente de cristaux selon l'une quelconque des revendications 1 à 7, laquelle comprend au moins un additif à raison de 0,0000001% à 5%, notamment de 0,01% à 5% en masse par rapport au poids total de la composition, ledit additif étant choisi parmi le glucose, le fructose, le sucre inverti, l'érythritol, les fructooligosaccharides, les oligofructoses, les maltodextrines, le caramel, le caramel décoloré et déodorisé, le maltol, des arômes masquant d'arrières goût, la thaumatine, la néohespéridine dihydrochalcone, l'acésulfame de potassium, l'aspartame et le cyclamate.

9. Composition pulvérulente de cristaux selon la revendication 5, dans laquelle le rébaudioside A est à une concentration de 9,8% ms (matière sèche) et le saccharose est à une concentration de 90,2% ms (matière sèche), ledit rébaudioside A sous sa forme amorphe étant encapsulé dans les cristaux de saccharose.

10. Mélange comprenant la composition pulvérulente de cristaux selon l'une quelconque des revendications 1 à 9 avec un glucide.

11. Procédé de fabrication d'une composition pulvérulente de cristaux telle que définie selon l'une quelconque des revendications 1 à 9, ledit procédé comprenant les étapes de:
- séchage par atomisation d'un sirop homogène et stable de viscosité inférieure à 50 centipoises (cP), constitué d'un extrait de stévia, d'un glucide cristallisable ou d'un mélange de glucides cristallisables et d'eau, dépourvu de germe cristallin, ledit sirop étant initialement à une température inférieure à 50°C, notamment inférieure à 30°C, pour l'obtention de particules de structure amorphe constituées d'un glucide cristallisable ou d'un mélange de glucides cristallisables, d'un extrait de stévia et de moins de 1% d'eau,
- cristallisation homogène du susdit extrait de stévia et du susdit glucide cristallisable ou du susdit mélange de glucides cristallisables formant les particules obtenues à l'étape précédente.

12. Procédé selon la revendication 11, dans lequel l'étape de séchage par atomisation est précédée d'une étape de chauffage flash à 95°C du susdit sirop homogène et stable, de viscosité inférieure à 50 cP, constitué du susdit extrait de stévia, du susdit glucide cristallisable ou du susdit mélange de glucides cristallisables et d'eau, dépourvu de germe cristallin, permettant d'abaisser la viscosité du susdit sirop homogène et stable à une viscosité inférieure à 10cP, sans modification substantielle de la teneur en eau du susdit sirop homogène et stable.

13. Procédé selon la revendication 11, dans lequel la cristallisation homogène s'effectue à l'air libre, ou non.

14. Procédé selon la revendication 11, dans lequel le sirop homogène et stable de viscosité inférieure à 50cP constitué du susdit extrait de stévia, du susdit glucide cristallisable ou du susdit mélange de glucides cristallisables et d'eau, dépourvu de germe cristallin est préparé par :
- mélange d'une solution aqueuse du susdit extrait de stévia, dans laquelle celui-ci est complètement solubilisé, et d'une solution aqueuse du susdit glucide cristallisable, dans laquelle celui-ci est complètement solubilisé, ou du susdit mélange de glucides cristallisables, dans laquelle ceux-ci sont complètement solubilisés, pour obtenir un sirop homogène et stable de viscosité inférieure à 50cP constitué du susdit extrait de stévia, du susdit glucide cristallisable ou du susdit mélange de glucides cristallisables et d'eau, dépourvu de germe cristallin,
- conservation éventuelle du sirop homogène et stable de viscosité inférieure à 50cP, constitué du susdit extrait de stévia, du susdit glucide cristallisable ou du susdit mélange de glucides cristallisables et d'eau, dépourvu de germe cristallin, obtenu à l'étape précédente, à une température inférieure à 50°C, notamment inférieure à 20°C.

15. Procédé selon la revendication 14 dans lequel :
- la solution aqueuse de l'extrait de stévia est préparée par dissolution dans l'eau du susdit extrait de stévia à une concentration de 5% à 25% de matière sèche, dans des conditions permettant la solubilisation complète de l'extrait de stévia, et notamment à une température comprise de 20°C à 100°C, notamment de 90°C à 100°C, en particulier de 95°C à 100°C, et/ou
- la solution aqueuse du glucide cristallisable ou du mélange de glucides cristallisables est préparée par dissolution dans l'eau du susdit glucide cristallisable ou du susdit mélange de glucides cristallisables à une concentration de 40% à 95% de matière sèche, dans des conditions permettant la solubilisation complète du susdit glucide cristallisable ou du susdit mélange de glucides cristallisables, et notamment à une température comprise de 0°C à 110°C, notamment de 30°C à 95°C..

16. Procédé selon la revendication 11, dans lequel l'étape de séchage par atomisation comprend les étapes suivantes :
- pulvérisation du susdit sirop homogène et stable de viscosité inférieure à 50cP, notamment inférieure à 10cP, comprenant le susdit extrait de stévia, le susdit glucide cristallisable ou le susdit mélange de glucides cristallisables et de l'eau, dépourvu de germe cristallin, pour former des gouttelettes du susdit sirop,
- séchage par atomisation des gouttelettes telles qu'obtenues à l'étape précédente, notamment par un flux continu d'air chaud à une température de 90°C à 190°C à l'entrée du sécheur et à une température de 85°C à 110°C à la sortie du sécheur pour obtenir des particules de structure amorphe comprenant le susdit glucide cristallisable ou le susdit mélange de glucides cristallisables, le susdit extrait de stévia et de moins de 1% d'eau,
- séchage des particules obtenues à l'étape précédente en présence d'amorces de séchage, lesdites amorces étant constituées notamment du susdit glucide cristallisable ou du susdit mélange de glucides cristallisables ayant servi à la préparation du susdit sirop homogène et stable de viscosité inférieure à 50cP, sur un lit fixe d'air chaud avec une température comprise de 50°C à 95°C,
- refroidissement des particules obtenues à l'étape précédente à une température inférieure à 35°C, notamment sur un lit fluidisé d'air chauffé à 20°C.

17. Procédé selon la revendication 11, comprenant les étapes de :
- mélange d'une solution aqueuse du susdit extrait de stévia, dans laquelle celui-ci est complètement solubilisé et d'une solution aqueuse du susdit glucide cristallisable, dans laquelle celui-ci est complètement solubilisé ou d'une solution aqueuse du susdit mélange de glucides cristallisables, dans laquelle ceux-ci sont complètement solubilisés pour obtenir un sirop homogène et stable de viscosité inférieure à 50cP, constitué du susdit extrait de stévia et du susdit glucide cristallisable ou du susdit mélange de glucides cristallisables et d'eau, dépourvu de germe cristallin,
- conservation éventuelle du susdit sirop homogène et stable de viscosité inférieure à 50cP, comprenant le susdit extrait de stévia, le susdit glucide cristallisable ou le susdit mélange de glucides cristallisables et de l'eau, dépourvu de germe cristallin, obtenu à l'étape précédente à une température inférieure à 50°C, notamment inférieure à 20°C,
- chauffage flash à 95°C du susdit sirop homogène et stable de viscosité inférieure à 50cP, comprenant le susdit extrait de stévia et le susdit glucide cristallisable ou le susdit mélange de glucides cristallisables et de l'eau, dépourvu de germe cristallin, permettant d'abaisser la viscosité du susdit sirop homogène et stable à une viscosité inférieure à 10cP, sans modification substantielle de la teneur en eau du susdit sirop homogène et stable,
- pulvérisation du susdit sirop homogène et stable de viscosité inférieure à 50cP, notamment inférieure à 10cP, comprenant le susdit extrait de stévia, le susdit glucide cristallisable ou le susdit mélange de glucides cristallisables et de l'eau, dépourvu de germe cristallin, pour former des gouttelettes du susdit sirop,
- séchage par atomisation des gouttelettes obtenues à l'étape précédente, notamment par un flux continu d'air chaud à une température de 90°C à 190°C à l'entrée du sécheur et à une température de 85°C à 110°C à la sortie du sécheur pour obtenir des particules de structure amorphe comprenant le susdit glucide cristallisable ou le susdit mélange de glucides cristallisables, le susdit extrait de stévia et de moins de 1% d'eau,
- séchage des particules obtenues à l'étape précédente en présence d'amorces de séchage, lesdites amorces étant constituées notamment du susdit glucide cristallisable ou du susdit mélange de glucides cristallisables ayant servi à la préparation du susdit sirop homogène et stable de viscosité inférieure à 50cP, sur un lit fixe d'air chaud avec une température comprise de 50°C à 95°C,
- refroidissement des particules obtenues à l'étape précédente à une température inférieure à 35°C, notamment sur un lit fluidisé d'air chauffé à 20°C,
- cristallisation homogène du susdit extrait de stévia et du susdit glucide cristallisable ou du susdit mélange de glucides cristallisables formant les particules obtenues à l'étape précédente à l'air libre, ou non.

18. Procédé selon la revendication 11 comprenant les étapes suivantes :
- mélange d'une solution aqueuse de rébaudioside A, à une concentration de 5% à 25% de matière sèche, préparée à une température comprise de 20°C à 100°C, notamment de 90°C à 100°C, en particulier de 95°C à 100°C, dans laquelle le rébaudioside A est complètement solubilisé et d'une solution aqueuse de saccharose à une concentration de 40% à 95% de matière sèche, préparée à une température comprise de 10°C à 110°C, notamment de 30°C à 95°C, dans laquelle le saccharose est complètement solubilisé pour obtenir un sirop homogène et stable de viscosité inférieure à 50cP, constitué de rébaudioside A, de saccharose et d'eau, dépourvu de germe cristallin, la matière sèche totale du sirop étant inférieure à 60%,
- conservation éventuelle du susdit sirop homogène et stable de viscosité inférieure à 50cP, constitué de rébaudioside A, de saccharose et d'eau, dépourvu de germe cristallin, obtenu à l'étape précédente à une température inférieure à 50°C, notamment inférieure à 20°C,
- chauffage flash à 95°C du susdit sirop homogène et stable de viscosité inférieure à 50cP, constitué de rébaudioside A, de saccharose et d'eau, dépourvu de germe cristallin, permettant d'abaisser la viscosité du susdit sirop homogène et stable à une viscosité inférieure à 10cP, sans modification substantielle de la teneur en eau du susdit sirop homogène et stable,
- pulvérisation du susdit sirop homogène et stable de viscosité inférieure à 50cP, notamment inférieure à 10cP, constitué de rébaudioside A, de saccharose et d'eau, dépourvu de germe cristallin, pour former des gouttelettes du susdit sirop,
- séchage par atomisation des gouttelettes obtenues à l'étape précédente, notamment par un flux continu d'air chaud à une température de 90°C à 190°C à l'entrée du sécheur et à une température de 85°C à 110°C à la sortie du sécheur pour obtenir des particules de structure amorphe constituées de de rébaudioside A, saccharose et de moins de 1% d'eau,
- séchage des particules obtenues à l'étape précédente en présence d'amorces de séchage, lesdites amorces étant constituées notamment de saccharose, sur un lit fixe d'air chaud avec une température comprise de 50°C à 95°C,
- refroidissement des particules obtenues à l'étape précédente à une température inférieure à 35°C, notamment sur un lit fluidisé d'air chauffé à 20°C,
- cristallisation homogène du susdit rébaudioside A et du susdit saccharose formant les particules obtenues à l'étape précédente à l'air libre, ou non.

19. Procédé selon la revendication 17, dans lequel un additif est rajouté à l'étape de :
- mélange de la susdite solution aqueuse du susdit extrait de stévia, dans laquelle celui-ci est complètement solubilisé et de la susdite solution aqueuse du susdit glucide cristallisable, dans laquelle celui-ci est complètement solubilisé ou de la susdite solution aqueuse du susdit mélange de glucides cristallisables, dans laquelle ceux-ci sont complètement solubilisés pour obtenir un sirop homogène et stable de viscosité inférieure à 50cP, constitué du susdit extrait de stévia, du susdit glucide cristallisable ou du susdit mélange de glucides cristallisables et d'eau, dépourvu de germe cristallin,
et/ou
- conservation éventuelle du susdit sirop homogène et stable de viscosité inférieure à 50cP, constitué du susdit extrait de stévia, du susdit glucide cristallisable ou du susdit mélange de glucides cristallisables et d'eau, dépourvu de germe cristallin, à une température inférieure à 50°C, notamment inférieure à 20°C,
ledit additif étant choisi parmi le glucose, le fructose, le sucre inverti, l'érythritol, les fructooligosaccharides, les oligofructoses, les matodextrines, le caramel, le caramel décoloré et déodorisé, le maltol, des arômes masquant d'arrières goût, la thaumatine, la néohespéridine dihydrochalcone, l'acésulfame de potassium, l'aspartame et le cyclamate.

20. Utilisation d'une composition pulvérulente telle que définie selon l'une des revendications 1 à 9, ou d'un mélange selon la revendication 10, comme agent édulcorant notamment dans :
- des préparations alimentaires liquides telles que les produits lactés, les boissons, les jus de fruits ou les sorbets,
- dans des préparations alimentaires solides telles que les pâtisseries, les biscuits, ou les viennoiseries, les confiseries, les chocolats,
- des préparations alimentaires semi-liquides telles que les produits à tartiner, les yoghourts, les laitages et les glaces,
- des préparations alimentaires sous forme d'émulsions telles que les sauces,
- des poudres comme les soupes déshydratées et les sauces déshydratées, les boissons déshydratées, le lait en poudre, le chocolat en poudre, les boissons instantanées en poudre, les produits de remplacement de repas ou les produits effervescents,
- des préparations pharmaceutiques,
- des sachets doses, sirop à sec, préparations pulvérulentes pour granulation et compression.

## Patentansprüche

1. Pulverförmige Zusammensetzung von Kristallen, umfassend:
- Kristalle eines kristallisierbaren Gluzids oder eines Gemisches von kristallisierbaren Gluziden im Verhältnis von mindestens 80%, insbesondere 90% in Masse bezogen auf das Gesamtgewicht der Zusammensetzung,
- einen Steviaextrakt im Verhältnis von 0,1% bis 20%, insbesondere von 0,3% bis 10% in Masse bezogen auf das Gesamtgewicht der Zusammensetzung, wobei der Steviaextrakt in seiner amorphen Form in den Kristallen des oben erwähnten kristallisierbaren Gluzids oder des Gemisches von kristallisierbaren Gluziden verkapselt ist,
wobei die Zusammensetzung mit einer stärkeren Süßkraft als jene des oben erwähnten kristallisierbaren Gluzids oder des oben erwähnten Gemisches von kristallisierbaren Gluziden und keinem bitteren Geschmack versehen ist, und wobei die Zusammensetzung einen niedrigeren Schmelzpunkt als jener des oben erwähnten kristallisierbaren Gluzids oder des oben erwähnten Gemisches von kristallisierbaren Gluziden besitzt.

2. Pulverförmige Zusammensetzung von Kristallen nach Anspruch 1, bei der das kristallisierbare Gluzid unter Saccharose, Glukose, Fruktose, Laktose oder einem Gemisch von mindestens zwei dieser kristallisierbaren Gluzide ausgewählt ist, bei der insbesondere das kristallisierbare Gluzid Saccharose ist.

3. Pulverförmige Zusammensetzung von Kristallen nach Anspruch 1 oder 2, bei der der Steviaextrakt unter den folgenden Steviol-Glykosiden ausgewählt ist: Rebaudiosid A, Rebaudiosid B, Rebaudiosid C, Rebaudiosid D, Rebaudiosid E, Rebaudiosid F, Steviosid, Steviolbiosid und Dulkosid A oder einem Gemisch aus mindestens zwei dieser Steviol-Glykoside, bei der insbesondere der Steviaextrakt das Rebaudiosid A ist, wobei die Rate an Rebaudiosid A in dem Steviaextrakt vorteilhafterweise mindestens 40% und insbesondere 90% bis 100% ist.

4. Pulverförmige Zusammensetzung von Kristallen nach einem der Ansprüche 1 bis 3, bei der das kristallisierbare Gluzid die Saccharose ist, und der Steviaextrakt das Rebaudiosid A ist.

5. Pulverförmige Zusammensetzung nach Anspruch 4, bei der das Rebaudiosid A in einer Konzentration von 0,1% bis 20% TM (Trockenmasse), insbesondere von 0,3% bis 10%, insbesondere von 0,3% bis 5%, insbesondere von 5% bis 10%, insbesondere von 6% bis 10% vorhanden ist, und die Saccharose in einer Konzentration von 80% bis 99,9% TM (Trockenmasse), insbesondere von 90% bis 99,7%, insbesondere von 95% bis 99,5%, insbesondere von 90% bis 95% vorhanden ist.

6. Pulverförmige Zusammensetzung von Kristallen nach Anspruch 4 oder 5, bei der der Schmelzpunkt der Kristalle von 185°C bis 188°C bei einer pulverförmigen Zusammensetzung, umfassend 90% bis 99,7% Saccharose und 0,3% bis 10% Rebaudiosid A variiert.

7. Pulverförmige Zusammensetzung von Kristallen nach einem der Ansprüche 4 bis 6, welche, wenn sie komprimiert wird, einen Widerstand von 1 bis 2,2 MPa bei einer Kompressionskraft, die von 15 bis 25 kN variiert, und eine Ejektionskraft von 70 bis 106 N bei einer Kompressionskraft, die von 15 bis 25 kN variiert, besitzt, und/oder bei der die Süßkraft 2-bis 65-mal stärker als jene des kristallisierbaren Gluzids oder des Gemisches von kristallisierbaren Gluziden ist, und/oder bei der die durchschnittliche granulometrische Verteilung der Kristalle von 140 µm bis 200 µm variiert, und/oder bei der der Wassergehalt kleiner oder gleich 1% in Masse bezogen auf das Gesamtgewicht der Zusammensetzung ist.

8. Pulverförmige Zusammensetzung von Kristallen nach einem der Ansprüche 1 bis 7, welche mindestens einen Zusatz im Verhältnis von 0,0000001% bis 5%, insbesondere von 0,01% bis 5% in Masse bezogen auf das Gesamtgewicht der Zusammensetzung umfasst, wobei der Zusatz unter Glukose, Fruktose, Invertzucker, Erythritol, Fruktooligosacchariden, Oligofruktosen, Maltodextrinen, Karamell, entfärbtem und deodorisiertem Karamell, Maltol, Nachgeschmack maskierenden Aromen, Thaumatin, Neohesperidin-Dihydrochalcon, Kaliumacesulfam, Aspartam und Cyclamat ausgewählt ist.

9. Pulverförmige Zusammensetzung von Kristallen nach Anspruch 5, bei der das Rebaudiosid A in einer Konzentration von 9,8& TM (Trockenmasse) und die Saccharose in einer Konzentration von 90,2% TM (Trockenmasse) vorhanden ist, wobei das Rebaudiosid A in seiner amorphen Form in den Saccharosekristallen verkapselt ist.

10. Gemisch, umfassend die pulverförmige Zusammensetzung von Kristallen nach einem der Ansprüche 1 bis 9 mit einem Gluzid.

11. Verfahren zur Herstellung einer pulverförmigen Zusammensetzung von Kristallen, wie nach einem der Ansprüche 1 bis 9 definiert, wobei das Verfahren die folgenden Schritte umfasst:
- Trocknen durch Atomisieren eines homogenen und stabilen Sirups mit einer Viskosität unter 50 Centipoise (cP), bestehend aus einem Steviaextrakt, einem kristallisierbaren Gluzid oder einem Gemisch aus kristallisierbaren Gluziden und Wasser, frei von einem Impfkristall, wobei der Sirup anfänglich auf einer Temperatur unter 50°C, insbesondere unter 30°C, ist, um Partikel von amorpher Struktur zu erhalten, die von einem kristallisierbaren Gluzid oder einem Gemisch von kristallisierbaren Gluziden, einem Steviaextrakt und mindestens 1% Wasser gebildet sind,
- homogenes Kristallisieren des oben erwähnten Steviaextrakts und des oben erwähnten kristallisierbaren Gluzids oder des oben erwähnten Gemisches von kristallisierbaren Gluziden, die die in dem vorhergehenden Schritt erhaltenen Partikel bilden.

12. Verfahren nach Anspruch 11, bei dem dem Schritt des Trocknens durch Atomisieren ein Schritt der Flash-Erhitzung auf 95°C des oben erwähnten homogenen und stabilen Sirups mit einer Viskosität unter 50 cP, bestehend aus dem oben erwähnten kristallisierbaren Gluzid oder dem oben erwähnten Gemisch von kristallisierbaren Gluziden und Wasser, ohne Impfkristall, vorausgeht, der es ermöglicht, die Viskosität des homogenen und stabilen Sirups auf eine Viskosität unter 10 cP ohne wesentliche Änderung des Wassergehalts des oben erwähnten homogenen und stabilen Sirups zu senken.

13. Verfahren nach Anspruch 11, bei dem das homogene Kristallisieren an der frischen Luft oder nicht erfolgt.

14. Verfahren nach Anspruch 11, bei dem der homogene und stabile Sirup mit einer Viskosität unter 50 cP, der aus dem oben erwähnten Steviaextrakt, dem oben erwähnten kristallisierbaren Gluzid oder dem oben erwähnten Gemisch von kristallisierbaren Gluziden und Wasser ohne Impfkristall gebildet ist, hergestellt durch:
- Mischen einer wässerigen Lösung des oben erwähnten Steviaextrakts, in der dieser vollkommen aufgelöst ist, und einer wässerigen Lösung des kristallisierbaren Gluzids, in der dieses vollkommen aufgelöst ist, oder des oben erwähnten Gemisches von kristallisierbaren Gluziden, in der diese vollkommen aufgelöst sind, um einen homogenen und stabilen Sirup mit einer Viskosität unter 50 cP zu erhalten, der aus dem oben erwähnten Steviaextrakt, dem oben erwähnten kristallisierbaren Gluzid oder dem oben erwähnten Gemisch von kristallisierbaren Gluziden und Wasser ohne Impfkristall gebildet ist,
- eventuelle Konservierung des homogenen und stabilen Sirups mit einer Viskosität unter 50 cP, der aus dem oben erwähnten Steviaextrakt, dem oben erwähnten kristallisierbaren Gluzid oder dem oben erwähnten Gemisch von kristallisierbaren Gluziden und Wasser ohne Impfkristall gebildet ist und in dem vorhergehenden Schritt hergestellt wurde, bei einer Temperatur unter 50°C, insbesondere unter 20°C.

15. Verfahren nach Anspruch 14, bei dem:
- die wässerige Lösung des Steviaextrakts durch Auflösung dieses oben erwähnten Steviaextrakts in einer Konzentration von 5% bis 25% Trockenmasse in Wasser unter Bedingungen, die die vollständige Auflösung des Steviaextrakts ermöglichen, insbesondere bei einer Temperatur von 20°C bis 100°C, insbesondere von 90°C bis 100°C, insbesondere von 95°C bis 100°C, hergestellt wird, und/oder
- die wässerige Lösung des kristallisierbaren Gluzids oder des Gemisches von kristallisierbaren Gluziden durch Auflösung dieses oben erwähnten kristallisierbaren Gluzids oder Gemisches von kristallisierbaren Gluziden in einer Konzentration von 40% bis 95% Trockenmasse in Wasser unter Bedingungen, die die vollständige Auflösung des kristallisierbaren Gluzids oder Gemisches von kristallisierbaren Gluziden ermöglichen, insbesondere bei einer Temperatur von 0°C bis 110°C, insbesondere von 30°C bis 95°C.

16. Verfahren nach Anspruch 11, bei dem Schritt des Trocknens durch Atomisieren die folgenden Schritte umfasst:
- Pulverisieren des oben erwähnten homogenen und stabilen Sirups mit einer Viskosität unter 50 cP, insbesondere unter 10 cP, der aus dem oben erwähnten Steviaextrakt, dem oben erwähnten kristallisierbaren Gluzid oder dem oben erwähnten Gemisch von kristallisierbaren Gluziden und Wasser ohne Impfkristall gebildet ist, um Tröpfchen des Sirups zu bilden,
- Trocknen der Tröpfchen, wie in dem vorhergehenden Schritt gewonnen, durch Atomisieren, insbesondere durch einen kontinuierlichen Heißluftstrom bei einer Temperatur von 90°C bis 190°C am Eingang des Trockners und bei einer Temperatur von 85°C bis 110°C am Ausgang des Trockners, um Partikel mit einer amorphen Struktur zu erhalten, die das oben erwähnte kristallisierbare Gluzid oder das oben erwähnte Gemisch von kristallisierbaren Gluziden, den Steviaextrakt und weniger als 1% Wasser enthalten,
- Trocknen der in dem vorhergehenden Schritt erhaltenen Partikel im Beisein von Trocknungsauslösern, wobei die Auslöser insbesondere von dem oben erwähnten kristallisierbaren Gluzid oder dem oben erwähnten Gemisch von kristallisierbaren Gluziden gebildet sind, die zur Herstellung des homogenen und stabilen Sirups mit einer Viskosität unter 50 cP gedient haben, auf einem festen Heißluftbett mit einer Temperatur von 50°C bis 95°C,
- Kühlen der in dem vorhergehenden Schritt erhaltenen Partikel bei einer Temperatur unter 35°C, insbesondere auf einem Heißluftfließbett von 20°C.

17. Verfahren nach Anspruch 11, umfassend die folgenden Schritte:
- Mischen einer wässerigen Lösung des oben erwähnten Steviaextrakts, in der dieser vollkommen aufgelöst ist, und einer wässerigen Lösung des kristallisierbaren Gluzids, in der dieses vollkommen aufgelöst ist, oder einer wässerigen Lösung des oben erwähnten Gemisches von kristallisierbaren Gluziden, in der diese vollkommen aufgelöst sind, um einen homogenen und stabilen Sirup mit einer Viskosität unter 50 cP zu erhalten, der aus dem oben erwähnten Steviaextrakt und dem oben erwähnten kristallisierbaren Gluzid oder dem oben erwähnten Gemisch von kristallisierbaren Gluziden und Wasser ohne Impfkristall gebildet ist,
- eventuelle Konservierung des homogenen und stabilen Sirups mit einer Viskosität unter 50 cP, der aus dem oben erwähnten Steviaextrakt, dem oben erwähnten kristallisierbaren Gluzid oder dem oben erwähnten Gemisch von kristallisierbaren Gluziden und Wasser ohne Impfkristall gebildet ist und in dem vorhergehenden Schritt hergestellt wurde, bei einer Temperatur unter 50°C, insbesondere unter 20°C,
- Flash-Erhitzung auf 95°C des oben erwähnten homogenen und stabilen Sirups mit einer Viskosität unter 50 cP, bestehend aus dem oben erwähnten Steviaextrakt und dem oben erwähnten kristallisierbaren Gluzid oder dem oben erwähnten Gemisch von kristallisierbaren Gluziden und Wasser, ohne Impfkristall, die es ermöglicht, die Viskosität des homogenen und stabilen Sirups auf eine Viskosität unter 10 cP ohne wesentliche Änderung des Wassergehalts des oben erwähnten homogenen und stabilen Sirups,
- Pulverisieren des oben erwähnten homogenen und stabilen Sirups mit einer Viskosität unter 50 cP, insbesondere unter 10 cP, der aus dem oben erwähnten Steviaextrakt, dem oben erwähnten kristallisierbaren Gluzid oder dem oben erwähnten Gemisch von kristallisierbaren Gluziden und Wasser ohne Impfkristall gebildet ist, um Tröpfchen des Sirups zu bilden,
- Trocknen der Tröpfchen, wie in dem vorhergehenden Schritt gewonnen, durch Atomisieren, insbesondere durch einen kontinuierlichen Heißluftstrom bei einer Temperatur von 90°C bis 190°C am Eingang des Trockners und bei einer Temperatur von 85°C bis 110°C am Ausgang des Trockners, um Partikel mit einer amorphen Struktur zu erhalten, die das oben erwähnte kristallisierbare Gluzid oder das oben erwähnte Gemisch von kristallisierbaren Gluziden, den Steviaextrakt und weniger als 1% Wasser enthalten,
- Trocknen der in dem vorhergehenden Schritt erhaltenen Partikel im Beisein von Trocknungsauslösern, wobei die Auslöser insbesondere von dem oben erwähnten kristallisierbaren Gluzid oder dem oben erwähnten Gemisch von kristallisierbaren Gluziden gebildet sind, die zur Herstellung des homogenen und stabilen Sirups mit einer Viskosität unter 50 cP gedient haben, auf einem festen Heißluftbett mit einer Temperatur von 50°C bis 95°C,
- Kühlen der in dem vorhergehenden Schritt erhaltenen Partikel bei einer Temperatur unter 35°C, insbesondere auf einem Heißluftfließbett von 20°C,
- homogene Kristallisation des oben erwähnten Steviaextrakts und des oben erwähnten kristallisierbaren Gluzids oder des oben erwähnten Gemisches von kristallisierbaren Gluziden, die die in dem vorhergehenden Schritt an der frischen Luft oder nicht erhaltenen Partikel bilden.

18. Verfahren nach Anspruch 11, umfassend die folgenden Schritte:
- Mischen einer wässerigen Lösung von Rebaudiosid A in einer Konzentration von 5% bis 25% Trockenmasse, die bei einer Temperatur von 20°C, bis 100°C, insbesondere von 90°C bis 100°C, insbesondere von 95°C bis 100°C, hergestellt wurde, in der das Rebaudiosid A vollständig aufgelöst ist, und einer wässerigen Lösung von Saccharose in einer Konzentration von 40% bis 95% Trockenmasse, die bei einer Temperatur von 10°C bis 110°C, insbesondere von 30°C bis 95°C, hergestellt wurde, in der die Saccharose vollständig aufgelöst ist, um einen homogenen und stabilen Sirup mit einer Viskosität unter 50 cP zu erhalten, der aus Rebaudiosid A, Saccharose und Wasser ohne Impfkristall gebildet ist, wobei die Gesamttrockenrnasse des Sirups unter 60% beträgt,
- eventuelle Konservierung des homogenen und stabilen Sirups mit einer Viskosität unter 50 cP, der aus Rebaudiosid A, Saccharose und Wasser ohne Impfkristall gebildet ist und in dem vorhergehenden Schritt hergestellt wurde, bei einer Temperatur unter 50°C, insbesondere unter 20°C,
- Flash-Erhitzung auf 95°C des oben erwähnten homogenen und stabilen Sirups mit einer Viskosität unter 50 cP, bestehend aus Rebaudiosid A, Saccharose und Wasser, ohne Impfkristall, die es ermöglicht, die Viskosität des homogenen und stabilen Sirups auf eine Viskosität unter 10 cP ohne wesentliche Änderung des Wassergehalts des oben erwähnten homogenen und stabilen Sirups,
- Pulverisieren des oben erwähnten homogenen und stabilen Sirups mit einer Viskosität unter 50 cP, insbesondere unter 10 cP, der aus Rebaudiosid A, Saccharose und Wasser ohne Impfkristall gebildet ist, um Tröpfchen des Sirups zu bilden,
- Trocknen der Tröpfchen, wie in dem vorhergehenden Schritt gewonnen, durch Atomisieren, insbesondere durch einen kontinuierlichen Heißluftstrom bei einer Temperatur von 90°C bis 190°C am Eingang des Trockners und bei einer Temperatur von 85°C bis 110°C am Ausgang des Trockners, um Partikel mit einer amorphen Struktur zu erhalten, die Rebaudiosid A, Saccharose und weniger als 1% Wasser enthalten,
- Trocknen der in dem vorhergehenden Schritt erhaltenen Partikel im Beisein von Trocknungsauslösern, wobei die Auslöser insbesondere von Saccharose gebildet sind, auf einem festen Heißluftbett mit einer Temperatur von 50°C bis 95°C,
- Kühlen der in dem vorhergehenden Schritt erhaltenen Partikel bei einer Temperatur unter 35°C, insbesondere auf einem Heißluftfließbett von 20°C,
- homogene Kristallisation des oben erwähnten Rebaudiosids A und der oben erwähnten Saccharose, die die in dem vorhergehenden Schritt an der frischen Luft oder nicht erhaltenen Partikel bilden.

19. Verfahren nach Anspruch 17, bei dem ein Zusatz in folgendem Schritt hinzugefügt wird:
- Mischen der wässerigen Lösung des oben erwähnten Steviaextrakts, in der dieser vollkommen aufgelöst ist, und der wässerigen Lösung des kristallisierbaren Gluzids, in der dieses vollkommen aufgelöst ist, oder der wässerigen Lösung des oben erwähnten Gemisches von kristallisierbaren Gluziden, in der diese vollkommen aufgelöst sind, um einen homogenen und stabilen Sirup mit einer Viskosität unter 50 cP zu erhalten, der aus dem oben erwähnten Steviaextrakt und dem oben erwähnten kristallisierbaren Gluzid oder dem oben erwähnten Gemisch von kristallisierbaren Gluziden und Wasser ohne Impfkristall gebildet ist,
und/oder
- eventuelle Konservierung des homogenen und stabilen Sirups mit einer Viskosität unter 50 cP, der aus dem oben erwähnten Steviaextrakt, dem oben erwähnten kristallisierbaren Gluzid oder dem oben erwähnten Gemisch von kristallisierbaren Gluziden und Wasser ohne Impfkristall gebildet ist und in dem vorhergehenden Schritt hergestellt wurde, bei einer Temperatur unter 50°C, insbesondere unter 20°C,
wobei der Zusatz unter Glukose, Fruktose, Invertzucker, Erythritol, Fruktooligosacchariden, Oligofruktosen, Maltodextrinen, Karamell, entfärbtem oder deodorisiertem Karamell, Maltol, Nachgeschmack maskierenden Aromen, Thaumatin, Neohesperidin-Dihydrochalcon, Kaliumacesulfam, Aspartam und Cyclamat ausgewählt ist.

20. Verwendung einer pulverförmigen Zusammensetzung, wie nach einem der Ansprüche 1 bis 9 definiert, oder eines Gemisches nach Anspruch 10 als Süßstoff insbesondere in:
- flüssigen Lebensmitteln, wie Milchprodukten, Getränken, Fruchtsäften oder Sorbets,
- festen Lebensmitteln, wie Kuchen, Keksen oder Hefegebäck, Konfekt, Schokoladen,
- halbflüssigen Lebensmitteln, wie Brotaufstrichen, Joghurts, Molkereiprodukten und Eis,
- Lebensmitteln in Form von Emulsionen, wie Saucen,
- Pulvern, wie Suppenpulvern und Saucenpulvern, Getränkepulvern, Milchpulvern, Schokoladepulvern, pulverförmigen Instantgetränken, Nahrungsersatzprodukten oder Brauseprodukten,
- Arzneimitteln,
- Portionsbeuteln, Trockensirup, pulverförmigen Produkten zur Granulation und Kompression.

## Claims

1. Powdery composition of crystals comprising :
- crystals of a crystallizable saccharide or of a mixture of crystallizable saccharides in an amount of at least 80 %, in particular 90 % by weight based on the total weight of the composition,
- a stevia extract in an amount of 0.1 % to 20 %, in particular from 0.3 % to 10 % by weight based on the total weight of the composition, said stevia extract in amorphous state being encapsulated in the crystals of said crystallizable saccharide or of said mixture of crystallizable saccharides,
said composition having a sweetening power superior to the sweetening power of the crystallizable saccharide or mixture of crystallizable saccharides and a flavor devoid of bitterness and said composition having a melting point inferior to the melting point of the said crystallizable saccharide or mixture of crystallizable saccharides.

2. Powdery composition of crystals according to claim 1, wherein the crystallizable saccharide is chosen among sucrose, glucose, fructose, lactose, or a mixture of at least two of these crystallizable saccharides, notably wherein the crystallizable saccharide is sucrose.

3. Powdery composition of crystals according to claim 1 or 2, wherein the stevia extract is chosen among the following steviol glycosides: rebaudioside A, rebaudioside B, rebaudioside C, rebaudioside D, rebaudioside E, rebaudioside F, stevioside, steviolbioside and dulcoside A, or a mixture of at least two of said steviol glycosides, notably wherein the stevia extract is rebaudioside A, the amount of rebaudioside A in the stevia extract being advantageously of at least 40 % and notably of 90 % to 100 %.

4. Powdery composition of crystals according to any one of claims 1 to 3, wherein the crystallizable saccharide is sucrose and the stevia extract is rebaudioside A.

5. Powdery composition of crystals according to claim 4, wherein the rebaudioside A is at a concentration of 0.1 % to 20 % dry matter, in particular of 0.3 % to 10 %, in particular of 0.3 % to 5 % in particular of 5 % to 10 %, in particular of 6 to 10 % and sucrose is at a concentration of 80 % to 99.9 % dry matter, in particular of 90 % to 99.7 %, in particular of 95 % to 99.5 %, in particular of 90 % to 95 %.

6. Powdery composition of crystals according to claim 4 or 5, wherein the melting point of the crystals ranges from 185 °C to 188 °C for a powdery composition comprising from 90 % to 99.7 % of sucrose and 0.3 % to 10 % of rebaudioside A.

7. Powdery composition of crystals according to any one of claims 4 to 6, having, once pressed, a resistance of 1 to 2.2 MPa for a compression force of 15 to 25 kN and an ejection force comprised between 70 to 106 N for a compression force of 15 to 25 kN, and/or wherein the sweetening power is 2 to 65 times superior to the sweetening power of the crystallizable saccharide or mixture of crystallizable saccharides, and/or wherein the average granulometric distribution of the crystals ranges from 140 µm to 200 µm, and/or wherein the water content is below or equal to 1 % by weight based on the total weight of the composition.

8. Powdery composition of crystals according to any one of claims 1 to 7, said composition comprising at least one additive in proportion of 0.0000001 % to 5 %, notably of 0.01 % to 5 % by weight based on the total weight of the composition, said additive being chosen among glucose, fructose, inverted sugar, erythritol, fructooligosaccharides, oligofructoses, maltodextrines, caramel, decolorized and deodorized caramel, maltol, after-taste masking aromas, thaumatin, neohesperidin dihydrochalcone, potassium acesulfame, aspartame and cyclamate.

9. Powdery composition of crystals according to claim 5, wherein the rebaudioside A is at a concentration of 9.8 % dry matter and sucrose is at a concentration of 90.2 % dry matter, said rebaudioside A in amorphous state being encapsulated in sucrose crystals.

10. A mixture comprising the Powdery composition according to any one of claims 1 to 9 with a saccharide.

11. A process for preparing a powdery composition as defined in any of claims 1 to 9, said process comprising the steps of:
- spray drying of a stable and homogeneous syrup having a viscosity of less than 50 centipoises (cP), constituted by a stevia extract, a crystallizable saccharide or mixture of crystallizable saccharides and water, devoid of a crystallization germ, said syrup being initially at a temperature of less than 50 °C, notably of less than a temperature of 30 °C, to obtain particles of amorphous structure constituted by a crystallizable saccharide or mixture of crystallizable saccharides, a stevia extract and less than 1 % of water,
- homogeneous crystallization of said stevia extract and said crystallizable saccharide or mixture of crystallizable saccharides forming the particles obtained in the previous step.

12. The process according to claim 11, wherein the spray drying step is preceded by a flash heating at 95 °C of said stable and homogeneous syrup, having a viscosity of less than 50 cP, constituted by said stevia extract, said crystallizable saccharide or mixture of crystallizable saccharides and water, enabling to lower the viscosity of said stable and homogeneous syrup to a viscosity of less than 10 cP, without substantial modification of the water content of said stable and homogeneous syrup.

13. The process according to claim 11, wherein the homogeneous crystallization takes place in open air, or not.

14. The process according to claim 11, wherein the stable and homogeneous syrup having a viscosity of less than 50 cP constituted by said stevia extract, said crystallizable saccharide or mixture of crystallizable saccharides and water, devoid of a crystallization germ is prepared by:
- mixing of an aqueous solution of said stevia extract in which it is fully solubilized, and of an aqueous solution of said crystallizable saccharide in which it is fully solubilized or mixture of crystallizable saccharides in which they are fully solubilized, to obtain a stable and homogeneous syrup, having a viscosity of less than 50 cP, constituted by said stevia extract, said crystallizable saccharide or mixture of crystallizable saccharides and water, devoid of a crystallization germ,
- optionally conserving said stable and homogeneous syrup, having a viscosity of less than 50 cP, constituted by said stevia extract, said crystallizable saccharide or mixture of crystallizable saccharides and water, devoid of a crystallization germ, obtained in the previous step, at a temperature of less than 50 °C, notably of less than 20 °C.

15. The process according to claim 14 wherein:
- the aqueous solution of stevia extract is prepared by dissolving said stevia extract in water to a concentration of 5 % to 25 % dry matter, in conditions enabling the complete solubilization of the stevia extract, and notably at a temperature of 20 °C to 100 °C, notably of 90 °C to 100 °C, in particular of 95 °C to 100 °C, and/or
- the aqueous solution of crystallizable saccharide or mixture of crystallizable saccharides is prepared by dissolving said crystallizable saccharide or mixture of crystallizable saccharides in water at a concentration of 40 % to 95 % dry matter, in conditions enabling the complete solubilization of the crystallizable saccharide or mixture of crystallizable saccharides, and notably at a temperature of 0 °C to 110 °C, notably of 30 °C to 95 °C.

16. The process according to claim 11, wherein the spray drying step comprises the following steps:
- pulverizing said stable and homogeneous syrup, having a viscosity of less than 50 cP, notably of less than 10 cP, constituted by said stevia extract, said crystallizable saccharide or mixture of crystallizable saccharides and water, devoid of a crystallization germ, to form droplets of said syrup,
- spray drying of the droplets obtained in the previous step, notably by a continuous warm air flow at a temperature of 90 °C to 190 °C at the dryer's inlet and a temperature of 85 °C to 110 °C at the dryer's outlet, to obtain particles having an amorphous structure comprising said stevia extract, said crystallizable saccharide or mixture of crystallizable saccharides and less than 1 % of water,
- drying of the particles obtained in the previous step in the presence of drying starters, said starters being notably constituted by said crystallizable saccharide or mixture of crystallizable saccharides having been used for preparing said stable and homogeneous syrup, having a viscosity of less than 50 cP, on a fixed bed of warm air flow having a temperature of 50 °C to 95 °C,
- cooling the particles obtained in the previous step at a temperature of less than 35 °C, notably on a fluidized air bed heated at 20 °C.

17. The process according to claim 11, comprising the steps of:
- mixing of an aqueous solution of said stevia extract in which it is fully solubilized, and of an aqueous solution of said crystallizable saccharide in which it is fully solubilized or mixture of crystallizable saccharides in which they are fully solubilized, to obtain a stable and homogeneous syrup, having a viscosity of less than 50 cP, constituted by said stevia extract, said crystallizable saccharide or mixture of crystallizable saccharides and water, devoid of a crystallization germ,
- optionally conserving said stable and homogeneous syrup, having a viscosity of less than 50 cP, constituted by said stevia extract, said crystallizable saccharide or mixture of crystallizable saccharides and water, devoid of a crystallization germ, obtained in the previous step, at a temperature of less than 50 °C, notably of less than 20 °C,
- flash heating at 95 °C of said stable and homogeneous syrup, having a viscosity of less than 50 cP, constituted by said stevia extract, said crystallizable saccharide or mixture of crystallizable saccharides and water, enabling to lower the viscosity of said stable and homogeneous syrup to a viscosity of less than 10 cP, without substantial modification of the water content of said stable and homogeneous syrup
- pulverizing said stable and homogeneous syrup, having a viscosity of less than 50 cP, notably of less than 10 cP, constituted by said stevia extract, said crystallizable saccharide or mixture of crystallizable saccharides and water, devoid of a crystallization germ, to form droplets of said syrup,
- spray drying of the droplets obtained in the previous step, notably by a continuous warm air flow at a temperature of 90 °C to 190 °C at the dryer's inlet and a temperature of 85 °C to 110 °C at the dryer's outlet, to obtain particles having an amorphous structure comprising said stevia extract, said crystallizable saccharide or mixture of crystallizable saccharides and less than 1 % of water,
- drying of the particles obtained in the previous step in the presence of drying starters, said starters being notably constituted by said crystallizable saccharide or mixture of crystallizable saccharides having been used for preparing said stable and homogeneous syrup, having a viscosity of less than 50 cP, , on a fixed bed of warm air flow having a temperature of 50 °C to 95 °C,
- cooling the particles obtained in the previous step at a temperature of less than 35 °C, notably on a fluidized air bed heated at 20 °C,
- homogeneous crystallization of said stevia extract and said crystallizable saccharide or mixture of crystallizable saccharides forming the particles obtained in the previous step in open air, or not.

18. The process according to claim 11, comprising the steps of:
- mixing of an aqueous solution of rebaudioside A, at a concentration of 5 % to 25 % dry matter, prepared at a temperature of 20 °C to 100 °C, notably of 90 °C to 100 °C, in particular of 95 °C to 100 °C, in which it is fully solubilized, and of an aqueous solution of sucrose at a concentration of 40 % to 95 % dry matter, prepared at a temperature of 0 °C to 110 °C, notably of 30 °C to 95 °C, to obtain a stable and homogeneous syrup, having a viscosity of less than 50 cP, constituted by rebaudioside A, sucrose and water, devoid of a crystallization germ, the total dry matter of said syrup being less than 60 %,
- optionally conserving said stable and homogeneous syrup, having a viscosity of less than 50 cP, constituted by rebaudioside A, sucrose and water, devoid of a crystallization germ, obtained in the previous step, at a temperature of less than 50 °C, notably of less than 20 °C,
- flash heating at 95 °C of said stable and homogeneous syrup, having a viscosity of less than 50 cP, constituted by rebaudioside A, sucrose and water, devoid of a crystallization germ, enabling to lower the viscosity of said stable and homogeneous syrup to a viscosity of less than 10 cP, without substantial modification of the water content of said stable and homogeneous syrup,
- pulverizing said stable and homogeneous syrup, having a viscosity of less than 50 cP, notably of less than 10 cP, constituted by rebaudioside A, sucrose and water, devoid of a crystallization germ, to form droplets of said syrup,
- spray drying of the droplets obtained in the previous step, notably by a continuous warm air flow at a temperature of 90 °C to 190 °C at the dryer's inlet and a temperature of 85 °C to 110 °C at the dryer's outlet, to obtain particles having an amorphous structure comprising rebaudioside A, sucrose and less than 1 % of water,
- drying of the particles obtained in the previous step in the presence of drying starters, said starters being notably constituted by sucrose, on a fixed bed of warm air flow having a temperature of 50 °C to 95 °C,
- cooling the particles obtained in the previous step at a temperature of less than 35 °C, notably on a fluidized air bed heated at 20 °C,
- homogeneous crystallization of said rebaudioside A and said sucrose forming the particles obtained in the previous step in open air, or not.

19. The process according to claim 17, wherein an additive is added during the step of
- mixing of an aqueous solution of said stevia extract in which it is fully solubilized, and of an aqueous solution of said crystallizable saccharide in which it is fully solubilized or mixture of crystallizable saccharides in which they are fully solubilized, to obtain a stable and homogeneous syrup, having a viscosity of less than 50 cP, constituted by said stevia extract, said crystallizable saccharide or mixture of crystallizable saccharides and water, devoid of a crystallization germ, and/or
- optionally conserving said stable and homogeneous syrup, having a viscosity of less than 50 cP, constituted by said stevia extract, said crystallizable saccharide or mixture of crystallizable saccharides and water, devoid of a crystallization germ, obtained in the previous step, at a temperature of less than 50 °C, notably of less than 20 °C,
said additive being chosen among glucose, fructose, inverted sugar, erythritol, fructooligosaccharides, oligofructoses, maltodextrines, caramel, decolorized and deodorized caramel, maltol, after-taste masking aromas, thaumatin, neohesperidin dihydrochalcone, potassium acesulfame, aspartame and cyclamate.

20. Use of a composition as defined in any one of claim 1 to 9 or a mixture according to claim 10 as sweetening agent notably in:
- liquid food preparations such as milk products, beverages, fruit juices or sorbets,
- solid food preparations such as pastries, biscuits, Viennese pastries, candies, chocolates,
- semi-liquid food preparations such as spreads, yoghourts, dairy milk and ice creams,
- food preparations in the form of emulsions such as dressings,
- powders such as dehydrated soups, dehydrated dressings, powdered milk, powdered chocolate, powdered instant drinks, meal substitutes, effervescent products,
- pharmaceutical preparations,
- single-serving sachets, dry syrups, powder preparations for granulation and compression.
